(19) Europäisches Patentamt
European Patent Office
Office européen des brevets

(11) **EP 4 783 108 A1**

(12) **EUROPEAN PATENT APPLICATION**

(43) Date of publication:
**29.07.2026 Bulletin 2026/31**

(21) Application number: **25305103.1**

(22) Date of filing: **27.01.2025**

(51) International Patent Classification (IPC):
*G06T 5/92* $^{(2024.01)}$

(52) Cooperative Patent Classification (CPC):
**G06T 5/92; H04N 19/30; H04N 19/85; H04N 19/98;**
G06T 2207/20208

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
• **TOUZE, David**
  **35200 RENNES (FR)**
• **LE NAOUR, Robin**
  **35510 CESSON-SEVIGNE (FR)**
• **CAUVIN, Laurent**
  **35250 CHEVAIGNE (FR)**

(74) Representative: **Interdigital**
**Immeuble ZEN 2**
**845 A, avenue des Champs Blancs**
**35510 Cesson-Sévigné (FR)**

(54) **HDR TO SDR TONE MAPPING WITH REFERENCE LEVEL CONSTRAINT**

(57)     A method for converting a first signal in a HDR domain in a second signal in a SDR domain comprising: determining (602) a first tone mapping curve from an analysis of the first signal;

modifying (80) the first tone mapping curve to obtain a second tone mapping curve passing through at least one reference level, a reference level representing a couple of a HDR luminance value and a SDR luminance value; and,

converting (603) a luminance component of the first signal into a luminance component of the second signal using the second tone mapping curve.

Fig. 8A

**EP 4 783 108 A1**

**Description**

1. TECHNICAL FIELD

At least one of the present embodiments generally relates to the field of production of High Dynamic Range (HDR) video and more particularly to a method, a device and an equipment implementing a HDR to SDR converter based on constraints specified by HDR and SDR reference levels aiming at setting a particular luminance level in a HDR to SDR conversion curve.

2. BACKGROUND

Recent advancements in display technologies allow for an extended dynamic range of color, luminance and contrast in images to be displayed. The term *image* refers here to an image content that can be for example a video or a still picture or image.

High-dynamic-range video (HDR video) describes video having a dynamic range greater than that of standard-dynamic-range video (SDR video).

HDR production is a new domain and there will be a transition phase during which both HDR contents and SDR contents will coexist.

A current trend of the content production industry is first, to produce HDR contents and then to derive automatically SDR contents from the HDR contents using automatic tools (this is known as single-master production and distribution workflow), and, second, to apply a controlled and safe approach for the HDR production to avoid delivering bad HDR or SDR contents to users.

In that respect, some recommendations have been introduced by the ITU-R document "Report ITU-R BT.2408-7, Guidance for operational practices in HDR television production, 09/2023", just called *BT.2408-7 report* in the following. One important recommendation introduced in the BT.2408-7 report is a constraint of HDR *Diffuse White* set to a fixed value equal to "203" nits. This constraint allows using fixed 3D-LUTs (Look-Up Tables) to implement SDR to HDR conversions (i.e. Inverse tone mapping (ITM)) and HDR to SDR conversions (tone mapping (TM)). The BT.2408-7 report also points the importance of nominal reference levels, that represent the typical luminance level of some very important parts of a scene: grass for football, tennis field, skin tones, etc. These reference levels may represent a constraint for SDR to HDR and HDR to SDR conversions. Different static LUTs solutions are available on the market. These static LUTs have different characteristics (i.e., they use different diffuse white values, different reference levels, different maximum specular HDR values, different TM and ITM curves, different source and target transfer functions and they have different extended range usage). Using these static LUTs makes the system being static, i.e., the conversions (either ITM or TM) are fixed and not adapted to dynamic characteristics of a content. Dynamic conversions, based on a use of a configurable and dynamic Diffuse White levels and reference levels for both HDR to SDR (tone mapping) and SDR to HDR (Inverse tone mapping) conversions, offer solutions to deal with this issue.

A real workflow is made with many different equipment from different providers. Nothing prevents the different providers to implement different solutions in their equipment, such as different static 3D-LUTs or dynamic solutions. However, equipment implementing different solutions are generally not interoperable.

A solution allowing insuring interoperability and based on metadata was proposed in document WO2024/179856. These interoperability metadata allow defining characteristics of a native HDR content and optionally characteristics of a SDR content resulting from a conversion of the HDR content. This allows a HDR to SDR converter to select a most appropriate HDR to SDR static LUT or a most appropriate configuration of a dynamic HDR to SDR converter, to deliver an optimal SDR content. In addition, these interoperability metadata allow defining characteristics of a HDR content generated with a SDR to HDR converter and characteristics of a SDR content it originated from. This allows a HDR to SDR converter to select a most appropriate HDR to SDR static LUT or a most appropriate configuration of a dynamic HDR to SDR converter, to realize an optimal SDR-HDR-SDR round-trip.

These interoperability metadata allow defining boundaries of the HDR to SDR and SDR to HDR conversion curves. However, with these boundaries, many different conversion curves may be designed.

It is desirable to overcome the above drawbacks.

It is particularly desirable to propose a solution to define more accurately a HDR to SDR conversion curve.

3. BRIEF SUMMARY

In a first aspect, one or more of the present embodiments provide a method for converting a first signal in a HDR domain in a second signal in a SDR domain comprising:

determining a first tone mapping curve from an analysis of the first signal;

modifying the first tone mapping curve to obtain a second tone mapping curve passing through at least one reference level, a reference level representing a couple of a HDR luminance value and a SDR luminance value; and, converting a luminance component of the first signal into a luminance component of the second signal using the second tone mapping curve.

In an embodiment, modifying the first tone mapping curve to obtain a second tone mapping curve passing through at least one reference level comprises:
modifying the first tone mapping curve based on a point (0,0) and a first reference level of the at least one reference level using a curve based on a gamma curve responsive to a first value is greater than zero, the first value depending on a first index representative of the HDR luminance value of the first reference level and on a ratio between a second value representative of the SDR luminance value of the first reference level and a third value provided by the first tone mapping curve for the first index representative of the HDR luminance value of the first reference level.

In an embodiment, responsive to the first reference level is above the first tone mapping curve, modifying the first tone mapping curve to obtain a second tone mapping curve passing through at least one reference level comprises:
modifying the first tone mapping curve based on the first reference level and a maximum point with an abscissa equal to a maximum HDR value and an ordinate equal to a maximum SDR value using a mathematical operation generating a second tone mapping curve starting at the reference level and joining progressively the first tone mapping curve at least at the maximum HDR value.

In an embodiment, responsive to the first reference level is below the first tone mapping curve, modifying the first tone mapping curve to obtain a second tone mapping curve passing through at least one reference level comprises:

defining a second index between a third index representing the HDR luminance value of the first reference level and a maximum HDR value, the second index representing an abscissa of a convergence point between the second tone mapping curve and the first tone mapping curve, the convergence point specifying an abscissa at which the second tone mapping curve joins the first tone mapping curve between the third index and the maximum HDR value; and modifying the first tone mapping curve to obtain the second tone mapping curve based on the first reference level and the convergence point.

In an embodiment, responsive to the second index is lower than the maximum HDR value, defining the second tone mapping curve as a copy of the first tone mapping curve between the second index and the maximum HDR value.

In an embodiment, modifying the first tone mapping curve to obtain a second tone mapping curve passing through at least one reference level comprises:

responsive to a first value is lower than or equal to zero, modifying the first tone mapping curve based on a point (0,0) and a first reference level of the at least one reference level between the point (0,0) and an index representing the HDR luminance value of the first reference level using a weighted average between the first tone mapping curve and a straight line passing through the reference level and parallel to a straight line passing through the point (0,0) and a maximum point with an abscissa equal to a maximum HDR value and an ordinate equal to a maximum SDR value; and, modifying the first tone mapping curve based on the first reference level of the at least one reference level and a maximum point with an abscissa equal to a maximum HDR luminance value and an ordinate equal to a maximum SDR value between the reference level and the maximum point using a weighted average between the first tone mapping curve and a straight line passing through the reference level and parallel to a straight line passing through the point (0,0) and the maximum point; the first value depending on a first index representative of the HDR luminance value of the first reference level and on a ratio between a second value representative of the SDR luminance value of the first reference level and a third value provided by the first tone mapping curve for the first index representative of the HDR luminance value of the first reference level.

In a second aspect, one or more of the present embodiments provide device for converting a first signal in a HDR domain in a second signal in a SDR domain comprising electronic circuitry configured for:

determining a first tone mapping curve from an analysis of the first signal; modifying the first tone mapping curve to obtain a second tone mapping curve passing through at least one reference level, a reference level representing a couple of a HDR luminance value and a SDR luminance value; and, converting a luminance component of the first signal into a luminance component of the second signal using the second tone mapping curve.

In an embodiment, modifying the first tone mapping curve to obtain a second tone mapping curve passing through at least one reference level comprises:

modifying the first tone mapping curve based on a point (0,0) and a first reference level of the at least one reference level using a curve based on a gamma curve responsive to a first value is greater than zero, the first value depending on a first index representative of the HDR luminance value of the first reference level and on a ratio between a second value representative of the SDR luminance value of the first reference level and a third value provided by the first tone mapping curve for the first index representative of the HDR luminance value of the first reference level.

In an embodiment, responsive to the first reference level is above the first tone mapping curve, modifying the first tone mapping curve to obtain a second tone mapping curve passing through at least one reference level comprises:

modifying the first tone mapping curve based on the first reference level and a maximum point with an abscissa equal to a maximum HDR value and an ordinate equal to a maximum SDR value using a mathematical operation generating a second tone mapping curve starting at the reference level and joining progressively the first tone mapping curve at least at the maximum HDR value.

In an embodiment, responsive to the first reference level is below the first tone mapping curve, modifying the first tone mapping curve to obtain a second tone mapping curve passing through at least one reference level comprises:

defining a second index between a third index representing the HDR luminance value of the first reference level and a maximum HDR value, the second index representing an abscissa of a convergence point between the second tone mapping curve and the first tone mapping curve, the convergence point specifying an abscissa at which the second tone mapping curve joins the first tone mapping curve between the third index and the maximum HDR value; and modifying the first tone mapping curve to obtain the second tone mapping curve based on the first reference level and the convergence point.

In an embodiment, responsive to the second index is lower than the maximum HDR value, defining the second tone mapping curve as a copy of the first tone mapping curve between the second index and the maximum HDR value.

In an embodiment, modifying the first tone mapping curve to obtain a second tone mapping curve passing through at least one reference level comprises:

responsive to a first value is lower than or equal to zero, modifying the first tone mapping curve based on a point (0,0) and a first reference level of the at least one reference level between the point (0,0) and an index representing the HDR luminance value of the first reference level using a weighted average between the first tone mapping curve and a straight line passing through the reference level and parallel to a straight line passing through the point (0,0) and a maximum point with an abscissa equal to a maximum HDR value and an ordinate equal to a maximum SDR value; and,

modifying the first tone mapping curve based on the first reference level of the at least one reference level and a maximum point with an abscissa equal to a maximum HDR luminance value and an ordinate equal to a maximum SDR value between the reference level and the maximum point using a weighted average between the first tone mapping curve and a straight line passing through the reference level and parallel to a straight line passing through the point (0,0) and the maximum point;

the first value depending on a first index representative of the HDR luminance value of the first reference level and on a ratio between a second value representative of the SDR luminance value of the first reference level and a third value provided by the first tone mapping curve for the first index representative of the HDR luminance value of the first reference level.

In a third aspect, one or more of the present embodiments provide a non-transitory information storage medium storing program code instructions for implementing the method according to the first aspect.

In a fourth aspect, one or more of the present embodiments provide computer program comprising program code instructions for implementing the method according to the first aspect.

4. BRIEF SUMMARY OF THE DRAWINGS

Figs. 1A and 1B illustrate respectively SDR to HDR and HDR to SDR conversion curves obtained using the six interoperability metadata defined in document WO2024/179856;
Fig. 1C illustrates with dashed lines that many different curves can be designed with the six interoperability metadata defined in document WO2024/179856;
Fig. 2 illustrates an example context in which various embodiments are implemented;

Fig. 3 illustrates a single-master HDR/SDR workflow;

Fig. 4A illustrates schematically an example of hardware architecture of a processing module able to implement various aspects and embodiments;

Fig. 4B illustrates a block diagram of an example of a first system in which various aspects and embodiments are implemented;

Fig. 4C illustrates a block diagram of an example of a second system in which various aspects and embodiments are implemented;

Fig. 5 illustrates schematically a known static HDR to SDR conversion process implemented by a HDR to SDR Tone Mapper;

Fig. 6 illustrates schematically a first example of a HDR to SDR conversion process implemented by a HDR to SDR Tone Mapper;

Fig. 7 illustrates schematically a second example of a HDR to SDR conversion process implemented by a HDR to SDR Tone Mapper;

Figs. 8A and 8B represent schematically variants of the conversion processes of Figs. 6 and 7 according to an embodiment;

Fig. 9 represents a typical tone mapping curve without static diffuse white characteristics;

Fig. 10 represents a typical tone mapping curve wherein the maximum SDR value is reached by a HDR value lower than a peak luminance value;

Fig. 11 represents a typical tone mapping curve wherein the maximum SDR value reached for the HDR value "1023" is limited to a value lower than "1";

Fig. 12 represents a typical tone mapping curve with static diffuse white characteristics;

Fig. 13 illustrates two examples of modification of the tone mapping curve of Fig. 12;

Figs. 14A and 14B illustrates two possible results of an adaptation of an original TM curve to reference levels;

Fig. 15 illustrates a global process of determining a reference level-based tone mapping curve;

Figs. 16A and 16B illustrate examples of sub-parts of reference level-based tone mapping curves obtained applying steps of the process of Fig. 15.

Fig. 17 illustrates a reference level-based tone mapping curve with a non-monotonic increasing part;

Fig. 18 illustrates a monotonic increasing reference level-based tone mapping curve;

Figs. 19A and 19B illustrate monotonic increasing reference level-based tone mapping curves obtained applying steps of the process of Fig. 15;

Fig. 20 illustrates a part of monotonic increasing reference level-based tone mapping curve obtained applying steps of the process of Fig. 15;

Figs. 21A and 21B illustrate two examples of a part of a monotonic increasing reference level-based tone mapping curve obtained applying steps of the process of Fig. 15;

Fig. 22 illustrates an example of algorithm applied for defining a reference level-based TM curve in case of unrealistic or extreme reference levels.

## 5. DETAILED DESCRIPTION

As said earlier, HDR production is a new domain and there will be a transition phase during which both HDR contents and SDR contents will coexist.

A current trend of the content production industry is first, to produce HDR contents and then to derive automatically SDR contents from the HDR contents using automatic tools, and second, to apply a controlled and safe approach for the HDR production to avoid delivering bad HDR or SDR contents to users.

In that respect, some recommendations have been introduced by the ITU-R document *"Report ITU-R BT.2408-7, Guidance for operational practices in HDR television production, 09/2023"*, just called *BT.2408-7 report* in the following. In the BT.2408-7 report, the most important recommendation is a constraint of HDR Diffuse White set to a fixed value equal to "203" nits.

The diffuse white is defined in BT.2408-7 report as *"the white provided by a card that approximates to a perfect reflecting diffuser by being spectrally grey, not just calorimetrically grey, by minimizing specular highlights and minimizing spectral power absorptance". A "perfect reflecting diffuser"* is defined as an *"ideal isotropic, non fluorescent diffuser with a spectral radiance factor equal to unity at each wavelength of interest"*.

In other words, the diffuse white is a luminance level (or luminance value) of a video signal that separates:

- the scene with all the details, corresponding to the luminance levels that are below the diffuse white;
- the speculars: very bright pixels, generally close to white and with very few details, corresponding to the luminance levels that are above the diffuse white level.

However, such ratio between the luminance values allocated to the details of the scene and the luminance values allocated to the speculars induced by the diffuse white at "203" nits renders the resulting HDR images very dull and not appealing.

Based on this HDR Diffuse White recommended value, different static LUTs solutions have been made available on the market. All these static LUTs are different: the Diffuse White values are different; the maximum specular HDR values are different; the extended range usage of these LUTs is different; the tone mapping and Inverse tone mapping curves are different; the source and target transfer function may be different.

Using static LUTs implies that the conversions (either ITM or TM) are fixed and not adapted to the dynamic characteristics of a content. Such static conversion results in very dull and not appealing video data. In addition, HDR cameras are not exploited to their maximum capabilities and HDR cameramen and director of photography are very restricted in their choices / artistic intent.

Dynamic conversion offers more flexibility and more artistic freedom in the HDR creation. It uses configurable and dynamic HDR Diffuse White level for both HDR to SDR and SDR to HDR conversions, allows dynamic HDR to SDR and SDR to HDR conversions and allows coupling ITM and TM processing (the TM processing applies the inverse of the ITM processing) for perfect SDR-HDR-SDR round-trip (i.e., the SDR output is as close as possible to the SDR input).

Document WO2024/179856 proposes a signaling mechanism relying in "6" interoperability metadata (HDR_DW, SDR_DW, HDR_NR, NFR_MIN, HDR_NFR, SDR_NFR_MAX) intended to be carried along a HDR content. These "6" interoperability metadata are representative of luminance values used to guide a HDR to SDR conversion. In particular, these interoperability metadata allow defining characteristics of a native HDR content and optionally characteristics of a SDR resulting from a HDR to SDR conversion of the HDR content. Hence, it allows a HDR to SDR converter to select a most appropriate HDR to SDR static LUT or a most appropriate configuration of a dynamic HDR to SDR converter, to deliver an optimal SDR content. Moreover, these interoperability metadata allow defining characteristics of a HDR content generated with a SDR to HDR converter and characteristics of a SDR content the HDR content originated from. This allows a HDR to SDR converter to select a most appropriate HDR to SDR static LUT or a most appropriate configuration of a dynamic HDR to SDR converter, to realize an optimal SDR-HDR-SDR round-trip. In addition, these interoperability metadata allow an interoperability between different equipment and technologies in a real workflow.

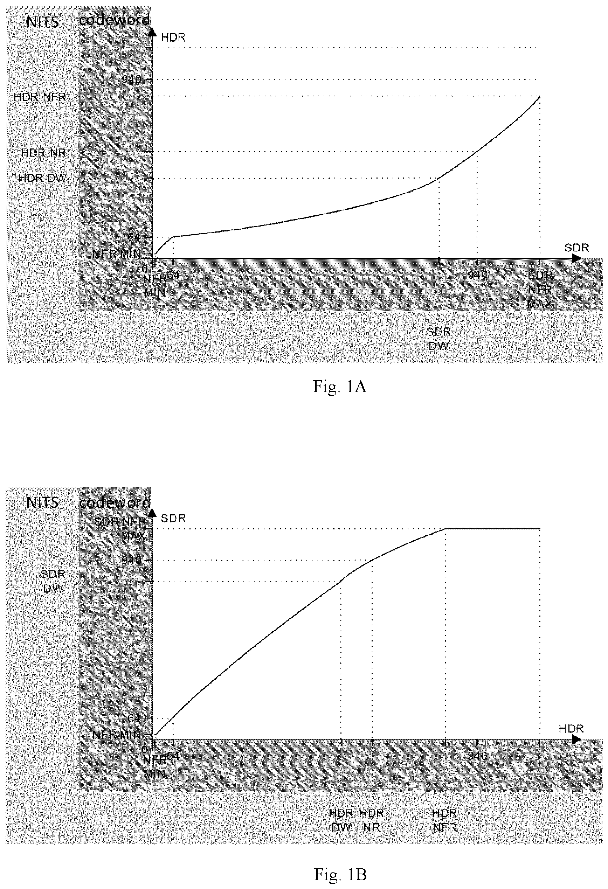

Figs. 1A and 1B illustrate respectively SDR to HDR and HDR to SDR conversion curves obtained using the six interoperability metadata proposed in document WO2024/179856.

While these six interoperability metadata define boundaries for the HDR to SDR and SDR to HDR conversions, there is no information regarding a shape of the conversion curves between a black point (corresponding to point (64, 64) in Fig. 1A and 1B) and the Diffuse White point (corresponding to point (HDR_DW, SDR_DW)).

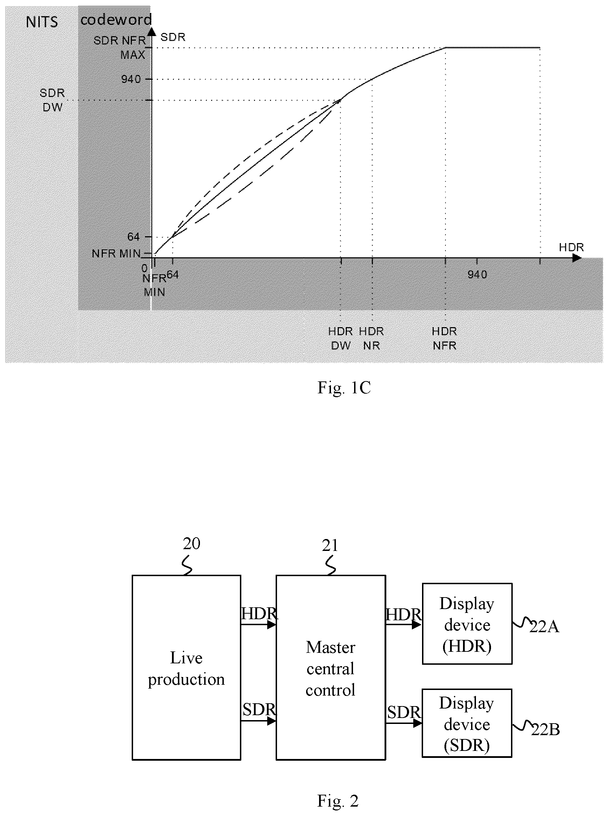

Taking the example of the HDR to SDR conversion of Fig. 1B, Fig. 1C illustrates with dashed lines that many different curves can be designed with the six interoperability metadata.

The shape of the curve has a big influence on a result of the conversion. One way to more accurately define a conversion curve is to define at least one new anchor point (also defined as a reference level) between the two boundaries (black point and Diffuse White point) that aims at setting a particular luminance level. A reference level is a couple of a HDR luminance value and a SDR luminance value.

In section 2.2 of the BT.2408-7 report, different examples of reference levels are provided, such as: a Grey card (18%) luminance level, set at 26 nits for HDR (both PQ and HLG) (see Table 1 of BT.2408-7); different skin tones with different ranges (see Table 2 of BT.2408-7); grass level in a sport production (see Table 2 of BT.2408-7). It is also mentioned in this section that the value of the reference level may vary depending on: indoor or outdoor conditions, regions, (i.e. skin tones are different in Asia than in Europe, than in America,...), global surroundings (for instance, in many sports, the field represents a large area in the scene and different cameras of a set are adjusted to be aligned around a similar reference value, that can be different depending on the sports (grass in football, clay in tennis, ...), the region... ).

By nature, static LUTs are well defined and the conversion curve between the black point and the Diffuse White point can be characterized by a reference level:

The different BBC LUTs are all characterized by a 40% Grey input mapped to a fixed Nominal luminance value. The reference level is different depending on the LUT. For instance, in document Release Notes for HLG Format Conversion LUTs v1.7, BBC Research, 03/2024, BBC_HDRTV_HLG_LUT_Release_Notes_v1-7.pdf.

- BBC LUT 5 (SDR to HDR HLG up-mapping) (page "23") maps 40% SDR input that represents "11.1" nits to HLG values R'=G'=B'=0.3107 or Y'(10b) = 336, that represents "16.2" nits.
- BBC LUT 6-1 (SDR to HDR HLG up-mapping) (page "25") maps 40% SDR input that represents "11.1" nits to HLG values R'=G'=B'=0.3562 or Y'(10b) = 376, that represents "22.4" nits.
- BBC LUT 6-2 (SDR to HDR HLG up-mapping) (page "28") maps 40% SDR input that represents "11.1" nits to HLG values R'=G'=B'=0.3706 or Y'(10b) = 389, that represents "24.7" nits.
- BBC LUT 8 (HDR HLG to SDR down-mapping) (page "33") maps 40% HLG input that represents "29.7" nits to SDR values R'=G'=B'=0.4914 or Y'(10b) = 494, that represents "18.1" nits.

- BBC LUT 9 (HDR HLG to SDR down-mapping) (page "36") maps 40% HLG input that represents "29.7" nits to SDR values R'=G'=B'=0.4966 or Y'(10b) = 500, that represents "18.7" nits.

The different NBCU LUTs are all characterized with the mid-grey value of "26" nits, see Annex "4", section d (page "43") of document NBCUniversal Single-Stream Broadcast Production and Distribution Recommendations #NBCU-Rec-UHD-HDR-01.19, April 11th, 2024:

- NBCU LUT 1 (SDR to HDR HLG up-mapping) maps 42.46% SDR input that corresponds to "26" nits on an adjusted SDR peak white level at "203" nits, that is equivalent to "12.8" nits on a standard SDR peak level at "100" nits, to 38 % HLG output that represents "26" nits.
- NBCU LUT 4 (SDR to HDR PQ up-mapping) maps 42.46% SDR input that corresponds to "26" nits on an adjusted SDR peak white level at "203" nits, that is equivalent to "12.8" nits on a standard SDR peak level at "100" nits, to 38 % PQ output that represents "26" nits

  ◦ NBCU LUT 3 (HDR HLG to SDR down-mapping) maps 38 % HLG input that represents "26" nits to 42.46% SDR output that corresponds to "26" nits on an adjusted SDR peak white level at "203" nits, that is equivalent to "12.8" nits on a standard SDR peak level at "100" nits
  ◦ NBCU LUT 5 (HDR PQ to SDR down-mapping) maps 38 % PQ input that represents "26" nits to 42.46% SDR output that corresponds to "26" nits on an adjusted SDR peak white level at "203" nits, that is equivalent to "12.8" nits on a standard SDR peak level at "100" nits

As can be seen above, each LUT has its proper reference level (i.e. anchor point).

By nature, dynamic conversions adapt to each frame (or each cut, with subsequent temporal processing done on a frame basis) with the most appropriate conversion curve. This means that there is no guarantee that a stable reference level at the input of a dynamic HDR to SDR or a SDR to HDR converter remains stable at the output of the dynamic converter.

In a typical single stream HDR/SDR workflow, with or without the six interoperability metadata, as there is no signaling mechanism that informs on the value of the reference levels used in the conversion, there is risk of mismatch during the conversion.

One solution to deal with this issue is to add at least on couple of reference level metadata (HDR_RL, SDR_RL), each couple representing a reference level.

In the following, various embodiments propose an implementation of a HDR to SDR converter that implements constraints imposed by reference Levels in both a HDR content and a resulting SDR content, with and without the constraints of the six interoperability metadata.

**Fig.2** illustrates an example context in which various embodiments are implemented.

In Fig. 2, a live production system 20 is communicating with a master central control system 21. The live production system 20 provides simultaneously a HDR version and a SDR version of a same live content.

The master central control system 21 then encodes the same or an enriched version of these SDR and HDR versions and provides these encoded versions to devices 22A and 22B. In an embodiment, the master central control system 21 encodes the HDR and SDR versions using an AVC ((ISO/CEI 14496-10 / ITU-T H.264) encoder, an HEVC (ISO/IEC 23008-2 - MPEG-H Part 2, High Efficiency Video Coding / ITU-T H.265)) encoder, a VVC (ISO/IEC 23090-3 - MPEG-I, Versatile Video Coding/ ITU-T H.266) encoder or any other encode such as AOM VP9, AV1, AV2.

Devices 22A and 22B are display devices such as a PC, a TV, a smartphone, a tablet or a head mounted display or a device connected to a display device such as a set top box. The device 22A that have HDR capabilities receives an encoded HDR version. The device 22B that have only SDR capabilities receives an encoded SDR version.

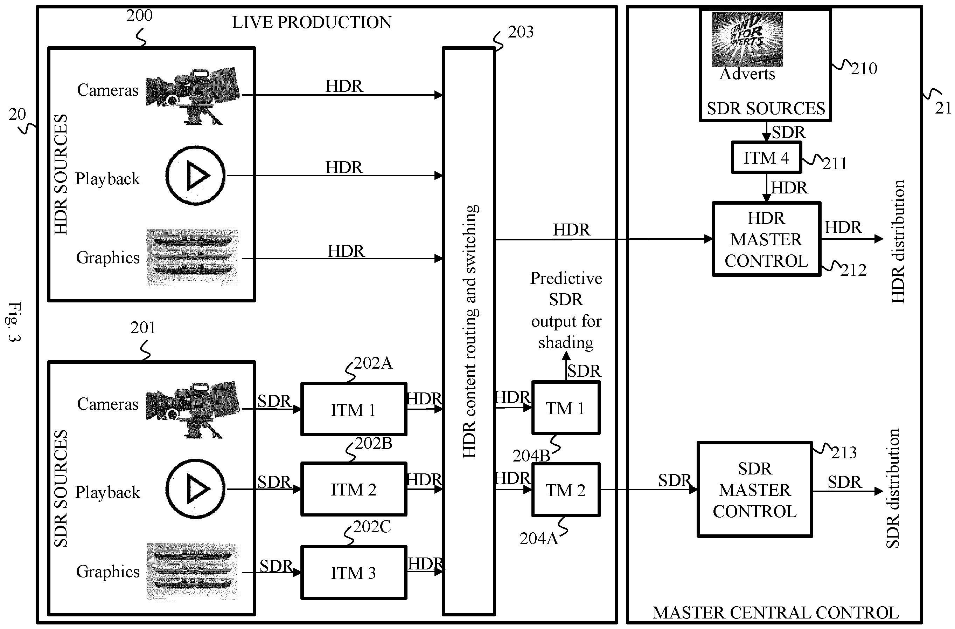

**Fig. 3** illustrates a Single-master HDR/SDR workflow. Fig. 3 provides details on the live production system 20 and the master central control system 21.

The live production system 20 comprises two sources: a HDR source 200 and a SDR source 201. Each source comprises at least one of a camera, a playback system or a system that generates graphics. The SDR source 201 is connected to a plurality of ITM tools:

- one ITM tool 202A (ITM1) for SDR camera output up-conversion to HDR;
- one ITM tool 202B (ITM2) for SDR playback content up-conversion to HDR; and,
- one ITM tool 202C (ITM3) for SDR graphics (score insertion for instance) content up-conversion to HDR.

A HDR content routing and switching system 203 obtains the multiple HDR inputs that come either from the HDR source 200 or from the SDR source 201 and then generates multiple HDR outputs.

From these HDR outputs, multiple TM tools are used:

- A TM tool 204B (TM1) for generating a predictive SDR output that is used by shaders operators that assess a quality of the generated SDR contents that are sent to the master central control system 21.
- A TM tool 204A (TM2) for generating a SDR provided to the master central control system 21.

The master central control system 21 comprises a HDR master control system 212 and a SDR master control system 213. The HDR and SDR master control systems are in charge of distributing respectively HDR and SDR contents. In the example of Fig. 3, the master central control system 21 comprises a source 210 generating adverts in SDR and an ITM tool 211 that convert the adverts from SDR to HDR. The HDR master control system 212 receives these adverts converted in HDR and mixes these adverts with the HDR content it receives. The HDR (respectively the SDR) master control system 212 (respectively 213) encodes the HDR (respectively the SDR data) it receives or resulting from a mixture of the HDR (respectively SDR) data it receives with other data. For example, the SDR and HDR data are encoded by an AVC encoder, an HEVC encoder, a VVC encoder or any other video encoder.

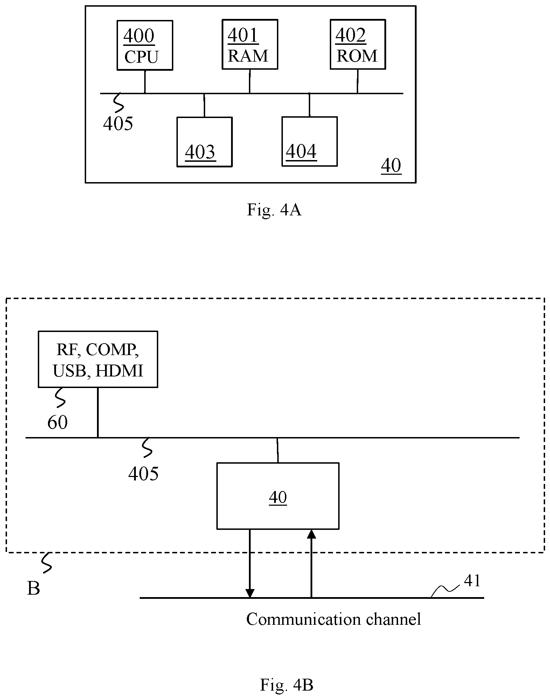

**Fig. 4A** illustrates schematically an example of hardware architecture of a processing module 40 comprised in the live production system 20, in a system or module comprised in the live production system 20 such as the ITM tools 202A, 202B and 202C or the TM tools 204B and 204A, in the master central control system 21 or in a system or module of the master central control system 21 such as the ITM tool 211, or in the devices 22A and 22B. The processing module 40 comprises, connected by a communication bus 405: a processor or CPU (central processing unit) 400 encompassing one or more microprocessors, general purpose computers, special purpose computers, and processors based on a multi-core architecture, as non-limiting examples; a random access memory (RAM) 401; a read only memory (ROM) 402; a storage unit 403, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive, or a storage medium reader, such as a SD (secure digital) card reader and/or a hard disc drive (HDD) and/or a network accessible storage device; at least one communication interface 404 for exchanging data with other modules, devices, systems or equipment. The communication interface 404 can include, but is not limited to, a transceiver configured to transmit and to receive data over a communication network 41 (not represented in Fig. 4A). The communication interface 404 can include, but is not limited to, a modem or a network card.

For example, the communication interface 404 enables the processing module 40 to transmit HDR or SDR data along with metadata such as interoperability metadata or metadata representing reference Levels.

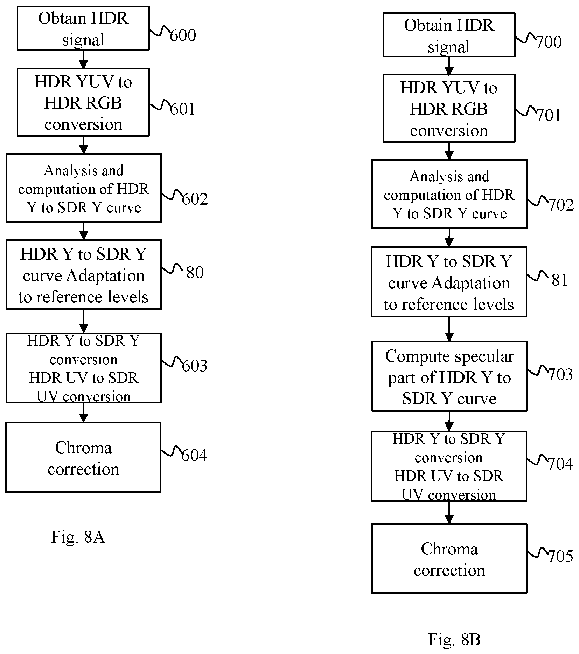

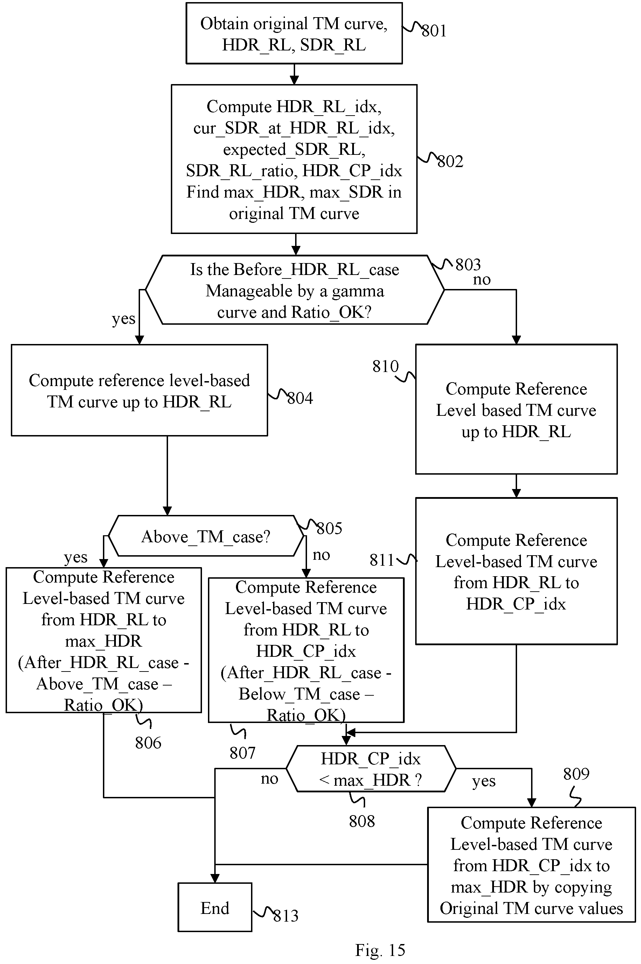

The processing module 40 is capable of executing instructions loaded into the RAM 401 from the ROM 402, from an external memory (not shown), from a storage medium, or from a communication network. When the processing module 40 is powered up, the processor 400 is capable of reading instructions from the RAM 401 and executing them. These instructions form a computer program causing, for example, the implementation by the processing module 40 of the TM modules 204A and 204B of the processes of Figs. 8A, 8B and 15.

All or some of the algorithms and steps of said processes may be implemented in software form by the execution of a set of instructions by a programmable machine such as a DSP (digital signal processor) or a microcontroller, or be implemented in hardware form by a machine or a dedicated component such as a FPGA (field-programmable gate array) or an ASIC (application-specific integrated circuit). Processor, DSP, microcontroller, FPGA and ASIC are particular cases of electronic circuitries.

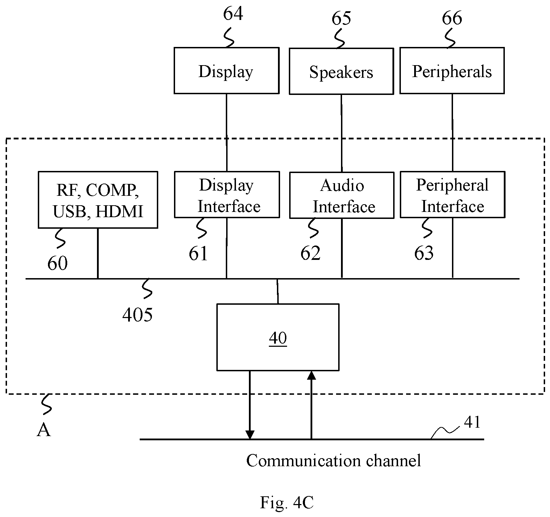

**Fig. 4C** illustrates a block diagram of an example of system A that corresponds to device 22A or 22B in which various aspects and embodiments are implemented.

System A can be embodied as a device including various components or modules and is configured to display a SDR or HDR content or to provide a SDR or HDR content to a display device adapted to display a SDR or a HDR content. Examples of such system include, but are not limited to, various electronic systems such as personal computers, laptop computers, smartphones, tablet, set top box or a TV. Components of system A, singly or in combination, can be embodied in a single integrated circuit (IC), multiple ICs, and/or discrete components. For example, in at least one embodiment, the system A comprises one processing module 40 that implements a decoding of a SDR or HDR content. In various embodiments, the system A is communicatively coupled to one or more other systems, or other electronic devices, via, for example, a communications bus or through dedicated input and/or output ports.

The input to the processing module 40 can be provided through various input modules as indicated in block 60. Such input modules include, but are not limited to, (i) a radio frequency (RF) module that receives an RF signal transmitted, for example, over the air by a broadcaster, (ii) a component (COMP) input module (or a set of COMP input modules), (iii) a Universal Serial Bus (USB) input module, and/or (iv) a High Definition Multimedia Interface (HDMI) input module. Other examples, not shown in Fig. 4C, include composite video.

In various embodiments, the input modules of block 60 have associated respective input processing elements as known in the art. For example, the RF module can be associated with elements suitable for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which can be referred to as a channel in certain embodiments, (iv) demodulating the down-converted and bandlimited signal, (v) performing error correction, and (vi) demultiplexing to select the desired stream of data packets. The RF module of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down-converting the received signal to a lower frequency (for example, an intermediate frequency or a near-baseband frequency) or to baseband. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF module includes an antenna.

Additionally, the USB and/or HDMI modules can include respective interface processors for connecting system A to other electronic devices across USB and/or HDMI connections. It is to be understood that various aspects of input processing, for example, Reed-Solomon error correction, can be implemented, for example, within a separate input processing IC or within the processing module 40 as necessary. Similarly, aspects of USB or HDMI interface processing can be implemented within separate interface ICs or within the processing module 40 as necessary. The demodulated, error corrected, and demultiplexed stream is provided to the processing module 40.

Various elements of system A can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the system A, the processing module 40 is interconnected to other elements of said system A by the bus 405.

The communication interface 404 of the processing module 40 allows the system A to communicate on the communication network 41. The communication network 41 can be implemented, for example, within a wired and/or a wireless medium.

Data is streamed, or otherwise provided, to the system A, in various embodiments, using a wireless network such as a Wi-Fi network, for example IEEE 802.11 (IEEE refers to the Institute of Electrical and Electronics Engineers). The Wi-Fi signal of these embodiments is received over the communications network 41 and the communications interface 404 which are adapted for Wi-Fi communications. The communications network 41 of these embodiments is typically connected to an access point or router that provides access to external networks including the Internet for allowing streaming applications and other over-the-top communications. Still other embodiments provide streamed data to the system A using the RF connection of the input block 60. As indicated above, various embodiments provide data in a non-streaming manner, for example, when the system A is a smartphone or a tablet. Additionally, various embodiments use wireless networks other than Wi-Fi, for example a cellular network or a Bluetooth network.

The system A can provide an output signal to various output devices using the communication network 41 or the bus 405. For example, when the system A is a set top box, the system A can provide a decoded SDR or HDR signal to a display.

The system A can provide an output signal to various output devices, including a display 64 (if for example the system A is a set top box provided a decoded SDR or HDR signal to a display), speakers 65, and other peripheral devices 66. The display 64 of various embodiments includes one or more of, for example, a touchscreen display, an organic light-emitting diode (OLED) display, a curved display, and/or a foldable display. The display 64 can be for a television, a tablet, a laptop, a cell phone (mobile phone), or other devices. The display 64 can also be integrated with other components (for example, as in a smart phone), or separate (for example, an external monitor for a laptop). The display 64 is SDR or HDR content compatible. The other peripheral devices 66 include, in various examples of embodiments, one or more of a stand-alone digital video disc (or digital versatile disc) (DVR, for both terms), a disk player, a stereo system, and/or a lighting system. Various embodiments use one or more peripheral devices 66 that provide a function based on the output of the system A. For example, a disk player performs the function of playing the output of the system A.

In various embodiments, control signals are communicated between the system A and the display 64, speakers 65, or other peripheral devices 66 using signaling such as AV.Link, Consumer Electronics Control (CEC), or other communications protocols that enable device-to-device control with or without user intervention. The output devices can be communicatively coupled to system A via dedicated connections through respective interfaces 61, 62, and 63. Alternatively, the output devices can be connected to system A using the communication network 41 via the communication interface 404. The display 64 and speakers 65 can be integrated in a single unit with the other components of system A in an electronic device such as, for example, a television. In various embodiments, the display interface 61 includes a display driver, such as, for example, a timing controller (T Con) chip.

The display 64 and speakers 65 can alternatively be separate from one or more of the other components, for example, if the RF module of input block 60 is part of a separate set-top box. In various embodiments in which the display 64 and speakers 65 are external components, the output signal can be provided via dedicated output connections, including, for example, HDMI ports, USB ports, or COMP outputs.

**Fig. 4B** illustrates a block diagram of an example of the system B adapted to implement the live production system 20 or a module or device of the live production system 20 or the master central control system 21, or a module or a device of the master central control system 21 in which various aspects and embodiments are implemented.

System B can be embodied as a device including the various components and modules described above and is configured to perform one or more of the aspects and embodiments described in this document.

Examples of such devices include, but are not limited to, various electronic devices such as personal computers, laptop computers, a camera, a smartphone and a server. Elements or modules of system B, singly or in combination, can be embodied in a single integrated circuit (IC), multiple ICs, and/or discrete components. For example, in at least one embodiment, the system B comprises one processing module 40 that implement either an ITM tool (202A, 202B, 202C, 211) or a TM tool (204A, 204B). In various embodiments, the system B is communicatively coupled to one or more other systems, or other electronic devices, via, for example, a communications bus or through dedicated input and/or output ports.

The input to the processing module 40 can be provided through various input modules as indicated in block 60 already described in relation to Fig. 4C.

Various elements of system B can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the system B, the processing module 40 is interconnected to other elements of said system B by the bus 405.

The communication interface 404 of the processing module 40 allows the system B to communicate on the communication network 41. The communication network 41 can be implemented, for example, within a wired and/or a wireless medium.

Data is streamed, or otherwise provided, to the system B, in various embodiments, using a wireless network such as a Wi-Fi network, for example IEEE 802.11 (IEEE refers to the Institute of Electrical and Electronics Engineers). The Wi-Fi signal of these embodiments is received over the communications network 41 and the communications interface 404 which are adapted for Wi-Fi communications. The communications network 41 of these embodiments is typically connected to an access point or router that provides access to external networks including the Internet for allowing streaming applications and other over-the-top communications. Still other embodiments provide streamed data to the system B using the RF connection of the input block 60. As indicated above, various embodiments provide data in a non-streaming manner.

When a figure is presented as a flow diagram, it should be understood that it also provides a block diagram of a corresponding apparatus. Similarly, when a figure is presented as a block diagram, it should be understood that it also provides a flow diagram of a corresponding method/process.

One or more embodiments provide a computer program comprising instructions which when executed by one or more processors cause such processors to perform the methods according to any of the embodiments described above. One or more embodiments also provide a computer readable storage medium having stored thereon instructions for encoding or decoding video data according to the methods described above.

One or more embodiments provide a computer readable storage medium having stored thereon data generated according to the methods described above. One or more embodiments also provide a method and apparatus for transmitting or receiving data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

Generally, a HDR to SDR Tone Mapper obtains a HDR content in YUV format (either 420, 422, 444 or V210) and generates a SDR content in YUV format (either 420, 422, 444 or V210).

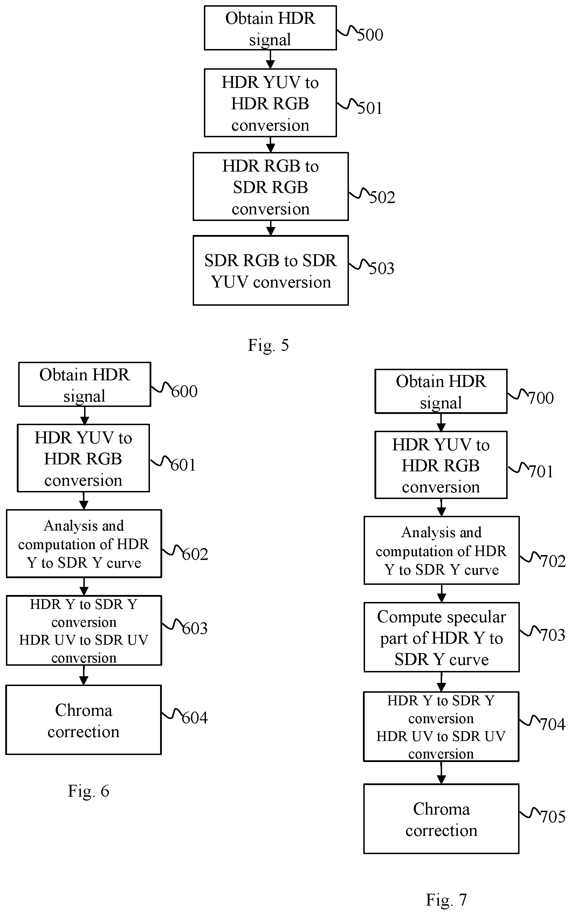

**Fig. 5** illustrates schematically a known static HDR to SDR conversion process implemented by a HDR to SDR Tone Mapper.

The HDR to SDR tone mapper is for example the tone mapper 204A or 204B of Fig. 3. The conversion process of Fig. 5 is for example executed by the processing module 40 of the tone mapper 204A or 204B.

In a step 500, the processing module 40 obtains an input HDR YUV signal.

In a step 501, the processing module 40 converts the input HDR YUV signal into a HDR RGB signal using a known YUV-to-RGB conversion matrixial operation.

In a step 502, the processing module 40 applies static 3D-LUTs to convert each HDR RGB triplet of the HDR RGB signal into a SDR RGB triplet to generate a SDR RGB signal.

In a step 503, the processing module 40 converts the SDR RGB signal into a SDR YUV signal using a known RGB-to-YUV conversion matrixial operation.

When not using the "3" "Static Diffuse White" characteristics (HDR_DW, SDR_DW and HDR_NR) of the interoperability metadata, some dynamic solutions apply the conversion process of Fig. 6.

**Fig. 6** illustrates schematically a first example of a HDR to SDR conversion process implemented by a HDR to SDR Tone Mapper.

The conversion process of Fig. 6 is for example executed by the processing module 40 of the tone mapper 204A or 204B.

In a step 600, identical to the step 500, the processing module 40 obtains an input HDR YUV signal.

In a step 601, identical to step 501, the processing module 40 converts an input HDR YUV signal into a HDR RGB signal using a known YUV-to-RGB conversion matrixial operation.

In a step 602, the processing module 40 analyzes each HDR RGB triplets of the HDR RGB signal and determines a best adapted tone mapping (TM) conversion curve (or equivalently a best adapted tone mapping (TM) curve) between the HDR RGB signal (on a full luminance scale from "0" cd/m2 to peak luminance) and a SDR RGB signal (on a full luminance scale from "0" cd/m2 to "100" cd/m2), and stores the computed TM conversion curve in a LUT for instance.

In a step 603, the processing module 40 converts the HDR Y component into a SDR Y component using the TM conversion curve. The processing module also converts HDR UV components into SDR UV components.

In a step 604, the processing module 40 applies a chroma correction to the HDR U and V components to generate the SDR U and V components.

The combination of the SDR Y component and the SDR U and V component forms a SDR YUV signal.

When using the 3 "Static Diffuse White" characteristics (HDR_DW, SDR_DW and HDR_NR) of the interoperability metadata, some dynamic solutions apply the conversion process of **Fig. 7.**

**Fig. 7** illustrates schematically a second example of a HDR to SDR conversion process implemented by a HDR to SDR Tone Mapper.

The conversion process of Fig. 7 is for example executed by the processing module 40 of the tone mapper 204A or 204B.

In a step 700, identical to the step 500, the processing module 40 obtains an input HDR YUV signal.

In a step 701, identical to step 501, the processing module 40 converts an input HDR YUV signal into a HDR RGB signal using a known YUV-to-RGB conversion matrixial operation.

In a step 702, the processing module 40 analyzes all the HDR RGB triplets of the HDR RGB signal and computes a best TM conversion curve between the HDR signal (on a Diffuse White limited luminance scale from "0" cd/m2 to HDR_DW cd/m2) and a SDR signal (on a Diffuse White limited luminance scale from "0" cd/m2 to SDR_DW cd/m2), and stores the computed TM conversion curve in a LUT for instance. The computed TM curve computed in step 702 is therefore a partial TM curve called *diffuse white TM curve* in the following.

In a step 703, the processing module 40 computes a specular part of the TM conversion curve between the HDR signal (on a specular limited luminance scale from HDR_DW cd/m2 to peak luminance) and the SDR signal (on a specular limited luminance scale from SDR_DW cd/m2 to 100 cd/m2), and stores the specular part of the TM conversion curve in a LUT for instance.

In a step 704, the processing module 40 converts the HDR Y component into a SDR Y component based on a TM conversion curve corresponding to a combination of the partial TM curve obtained in step 702 and the specular part of the TM conversion curve obtained in step 703. In step 704, the processing module 40 also converts HDR UV components into SDR UV components.

In a step 705, the processing module 40 applies a chroma correction to the HDR U and V components to generate the SDR U and V components.

The above conversion processes of Fig. 6 and 7 don't allow an adaptation of the tone mapping curve to reference levels.

In the following, various embodiments propose a solution for adapting a tone mapping curve to reference levels in the dynamic scheme.

**Figs. 8A and 8B** represent schematically a variant of respectively of the conversion processes of Figs. 6 and 7. These variants comprise respectively an additional step 80 allowing modifying the TM conversion curve obtained in step 602 based on a reference level and an additional step 81 allowing modifying the diffuse white TM conversion curve obtained in step 702 based on a reference level. In other words, steps 80 and 81 allow modifying the tone mapping curve, called original TM curve to obtain a second tone mapping curve, called reference level-based TM curve (or RL TM curve or simply RL curve in the Figures), passing through a point representing the reference level. Steps 80 and 81 are detailed later in relation to Fig. 15.

The conversion processes of Figs. 8A and 8B are for example executed by the processing module 40 of the tone mapper 204A or 204B.

Generally, a TM curve is computed in a specific domain, for both the HDR and the SDR signal. For instance, the HDR domain can be PQ (as defined in document SMPTE ST 2084:2014: "High Dynamic Range Electro-Optical Transfer Function of Mastering Reference Displays "), HLG (as defined in document Recommendation ITU-R BT.2100-2, Image parameter values for high dynamic range television for use in production and international programme exchange, 07/2018), BT.1886 (Gamma 2.4) (as defined in document Recommendation ITU-R BT.1886 (03-2011): "Reference electro-optical transfer function for flat panel displays used in HDTV studio production "), linear or any specific perceptual domain, such as the perceptual uniform domain described in section C.2.2.2 of document ETSI TS 103 433-1 v1.4.1, High-Performance Single Layer High Dynamic Range (HDR) System for use in Consumer Electronics devices; Part 1: Directly Standard Dynamic Range (SDR) Compatible HDR System (SL-HDR1), 08/2021 just called SL-HDR1 in the following. In addition, the SDR domain can be BT.709 (As defined in Recommendation ITU-R BT. 709-6, Parameter values for the HDTV standards for production and international programme exchange, 06/2015), BT.1886 (gamma 2.4), linear or any specific perceptual domain, such as the perceptual uniform domain described in section 7.2.3.1.3 of SL-HDR1.

The various embodiments proposed in the following can work in any HDR or SDR domain but it is preferable to compute the adaptation in the original domains of the tone mapping on which the adaptation is made.

The tone mapping curve may be represented by a LUT, with:

- the HDR values in the HDR domain in abscissa. In the following we consider that the HDR values are normalized to their maximum value that is a peak luminance value of the HDR signal, i.e., each HDR value is divided by the peak luminance value so that the HDR range is in [0..1] with "1" being mapped to the peak luminance value. Let's consider a "10" bits LUT corresponding to a "10" bits HDR signal, then the normalized HDR values are mapped to "1024" LUT entries with the following operation: for each HDR input value $HDR\_in$, a corresponding entry of the LUT is $LUT\_entry[HDR\_in] = INT(HDR\_in * 1023 + 0.5)$ where $INT()$ is the integer part.

- the SDR values in the SDR domain in ordinate. In the following we consider that the SDR values are normalized to their maximum value that is the peak luminance of the SDR content (equal to 100 nits), i.e., each SDR value is divided by "100" so that the SDR range is in [0..1] with "1" being mapped to "100". Each entry of the LUT then contains a SDR value in the range [0..1].

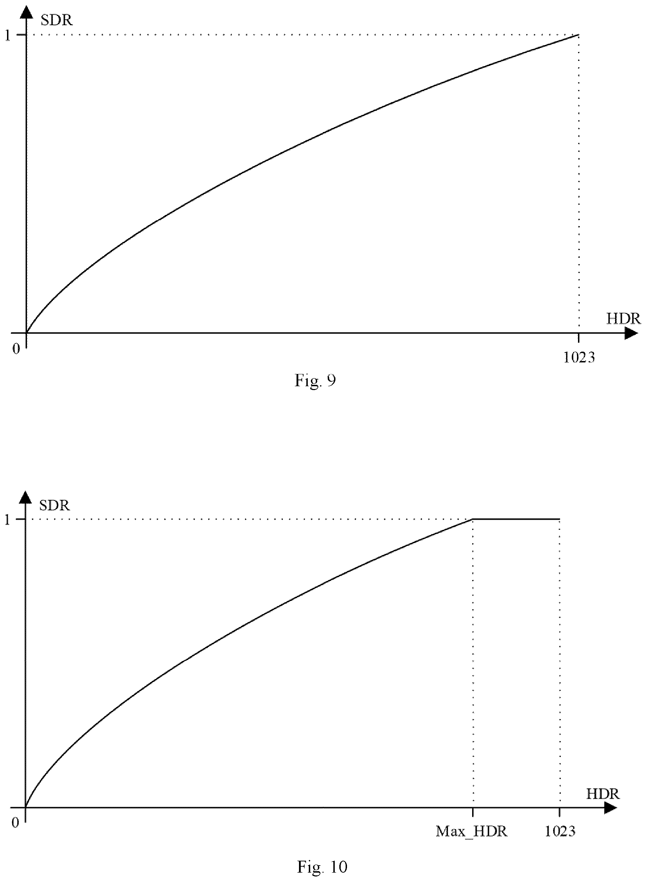

**Fig. 9** represents a typical TM curve without static diffuse white characteristics.

However, some tone mapping curves may not reach the extrema. Sometimes a maximum SDR value (i.e. 1) can be reached by a HDR value lower than the peak luminance value.

**Fig. 10** represents a typical TM curve wherein the maximum SDR value is reached by a HDR value lower than the peak luminance value.

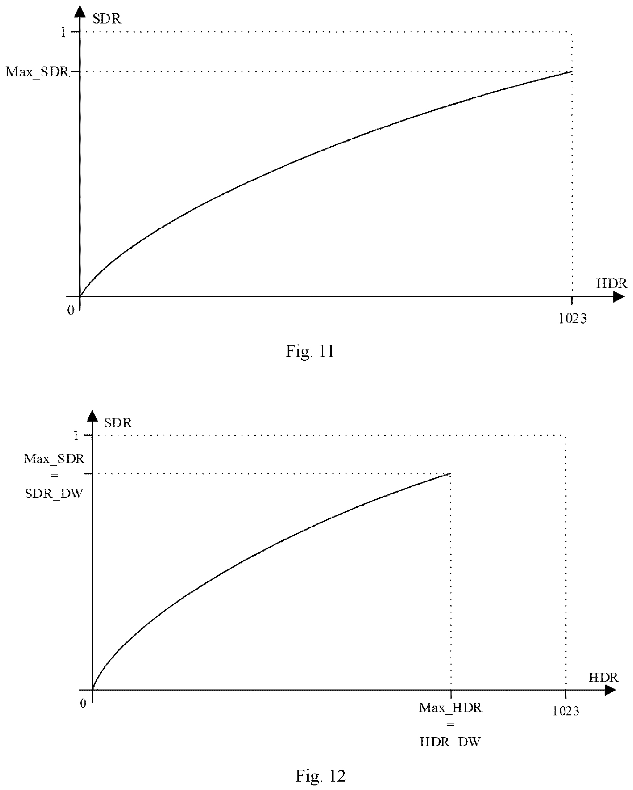

**Fig. 11** represents a typical TM curve wherein the maximum SDR value reached for the HDR value "1023" is limited to a value lower than "1".

**Fig. 12** represents a typical TM curve with static diffuse white characteristics. In this TM curve, the maximum SDR value Max_SDR is equal to SDR_DW and the maximum HDR value Max_HDR is equal to HDR_DW. As the interoperability metadata, Max_SDR and Max_HDR represent luminance values.

Let's take the last tone mapping curve of Fig. 12 as a general case able to represent all other TM curves. Indeed, in the TM curve of Fig. 9, it can be considered that Max_SDR = 1 and Max_HDR = 1023, in the TM curve of Fig. 10 it can be considered that Max_SDR = 1 and Max_HDR equals a value lower than "1023", in the TM curve of Fig. 11 it can be considered that Max SDR is equal to a value lower than "1" and Max_HDR = 1023, and the TM curve of Fig. 12 it can be considered that Max_SDR = SDR_DW and Max_HDR = HDR_DW. The fact that the tone mapping curve of Fig. 12 is a general case and that all other tone mapping curves are only particular cases of this general case explains why the process of Fig. 15 can be applied in steps 80 and 81.

With the general case of Fig. 12, the use of the reference levels aims at modifying the TM curve so that it reaches a point (HDR_RL, SDR_RL) representing a reference level.

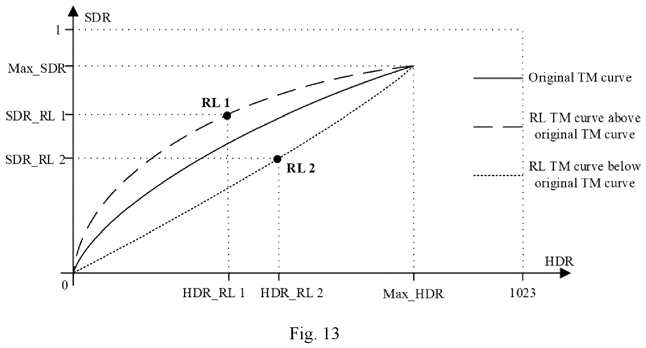

**Fig. 13** illustrates two examples of modification of the TM curve of Fig. 12.

As can be seen in Fig. 13, two cases are possible:

The reference level point (RL 1) is above the original TM curve, therefore the reference level-based TM curve is above the original TM curve. Let's call this case *Above_TM_case*;

The reference level point (RL 2) is below the original TM curve, therefore the reference level-based TM curve is below the original TM curve. Let's call this case *Below_TM_case.*

In the following, we show that these two cases are managed differently, using different methods.

There are two parts in the reference level-based TM curve:

A first part up to the HDR_RL abscissa, where the reference level-based TM curve progressively moves away from the original TM curve, starting from the origin (corresponding to point (0,0)) and up to the reference level point (HDR_RL, SDR_RL). Let's call this case *Before_HDR_RL_case;*

A second part after the HDR_RL abscissa, where the reference level-based TM curve progressively gets closer to the original TM curve, starting from the reference level point (HDR_RL, SDR_RL) and up to the last point (Max_HDR, Max_SDR). Let's call this case *After_HDR_RL_case.*

Again, in the following, we show that these two cases are managed differently, using different methods.

For the *After_HDR_RL_case* case in the *Below_TM_case* case, if the HDR_RL abscissa is relatively close to origin, the second part of the reference level-based TM curve should not join the original TM curve at the last point (Max_HDR, Max_SDR), to avoid a too much different TM curve that would produce a too much different content in bright areas. Instead, a specific abscissa called *convergence point HDR_CP abscissa* is defined, that specifies an abscissa at which the second part of the reference level-based TM curve joins the original TM curve.

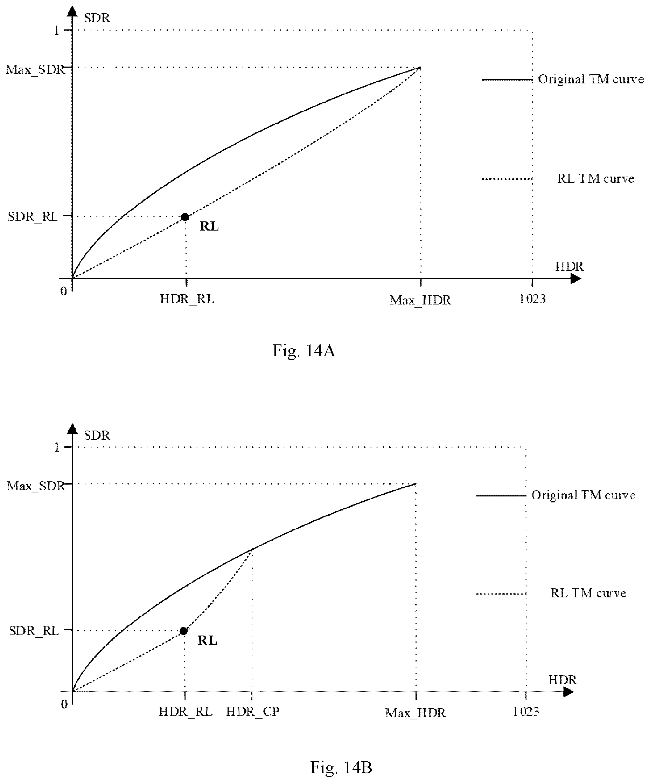

**Fig. 14A and 14B** illustrates two possible results of an adaptation of an original TM curve to reference levels for the *After_HDR_RL_case* case in the *Below_TM_case* case. The result of Fig. 14A without the convergence point HDR_CP abscissa is typically to avoid while the result of Fig. 14B with the convergence point HDR_CP abscissa is preferred.

One can note that this convergence point HDR_CP abscissa is valid for both *Above_TM_case* and *Below_TM_case* cases.

**Fig. 15** illustrates a global process of determining a reference level-based TM curve.

The process of Fig. 15 corresponds to steps 80 and 81 in Fig. 8A and 8B and is therefore executed by the processing module 40 of the tone mapper 204A or 204B.

In a step 801, the processing module 40 obtains an original TM curve and a reference level. The original TM curve is *Orig_TM[i],* with *i* in *[0; max_LUT_index*-1]. In an embodiment based on SL-HDR1, *max LUT_index* = 1024, *i in* [0; 1023]. A reference level is for instance defined by a point with coordinates (HDR_RL,SDR_RL) corresponding to reference level metadata. One can note that reference level metadata may be added to the interoperability metadata.

In a step 802, the processing module 40 computes variables used during the process from the original TM curve and the reference level. These variables comprise:

- a variable *HDR_RL_idx* corresponding to the value of HDR_RL converted in the HDR domain, i.e. the variable *HDR_RL_idx* corresponds to the abscissa index of the value HDR_RL in the tone mapping curve. In the embodiment based on SL-HDR1, this variable is computed in the Gamma 2,4 domain with the following equation:

$$HDR\_RL\_idx = \text{power}(HDR\_RL / Content\_Peak\_Luminance, 1 / 2,4)$$

where HDR_RL and *Content_Peak_Luminance* are expressed in cd/m$^2$, Content_Peak_Luminance indicating the peak luminance of the HDR source content.

- A variable *cur SDR_at_HDR_RL_idx* obtained by determining a value provided by the original TM curve for the index *HDR_RL_idx*
  *cur SDR_at_HDR_RL_idx = Orig_TM[HDR_RL_idx]*

- A variable *expected_SDR_RL* corresponding to an expected value for *SDR_RL* converted in the SDR domain. In the embodiment based on SL-HDR1, the variable *expected_SDR_RL* is computed in the perceptual uniform domain described in section 7.2.3.1.3 of SL-HDR1 as follows:

   expected_SDR_RL = log10( 1 + (rho_sdr-1) * power(*SDR_*RL/100, 1/2,4) ) / log10(*rho_sdr*)
   with *rho_sdr* = 1 + (33 - 1) * power(100 / 10000, 1/2,4)

- A variable *SDR_RL_ratio* corresponding to a ratio between *expected_SDR_RL* and *cur_SDR_at_HDR_RL_idx* in the SDR domain:
   SDR_RL_ratio = expected_SDR_RL / cur_SDR_at_HDR_RL_idx

- A variable HDR *CP _idx* defining an index of a convergence point in the *After*HDR_RL _*case* case between the reference level-based TM curve and the original TM curve, in the HDR domain. As an example, in the embodiment based on SL-HDR1, this variable is computed as follows (but other values may be chosen for *HDR_CP_idx*):

   HDR_CP_idx = MIN(2 * HDR_RL_idx, max_HDR)
   *max_HDR* is found directly in the original TM curve.
   When not using the "3" "Static Diffuse White" characteristics (HDR_DW, SDR_DW and HDR_NR) of the interoperability metadata, *max_HDR* is the lowest index *i* with *Orig_TM[i]* = 1, *i* in [0..1023]. When using the "3" "Static Diffuse White" characteristics (HDR_DW, SDR_DW and HDR_NR) of the interoperability metadata, *max_HDR* corresponds to the *HDR_DW* value converted in the HDR domain, i.e. the variable *max_HDR* corresponds to the abscissa index of the *HDR_DW* value in the original TM curve. In the embodiment based on SL-HDR1, this variable is computed in the Gamma 2,4 domain with the following equation:

$$max\_HDR = \mathrm{power}(HDR\_DW / Content\_Peak\_Luminance, 1 / 2{,}4)$$

One can note that a variable *max_SDR* corresponds to a SDR value for the index *max_HDR* in the original TM curve:

$$max\_SDR = Orig\_TM[max\_HDR]$$

In a step 803, the processing module 40 determines if the *Before_HDR_RL_case* case can be managed by a gamma curve, i.e. the processing module 40 determines if the part of the curve between the origin (corresponding to point (0,0)) and the reference level point (HDR_RL, SDR_RL) can be determined using a gamma curve.
In the embodiment based on SL-HDR1, the *Before_HDR_RL_case* case is expected to be managed by the following mathematical operation:
*For each index below or equal to HDR_RL_idx:*

$$RL\_TM[i] = Orig\_TM[i] * (1 + power(i / 1024, invGammaRescale) - i / 1024)$$

*(eq. 1)*

With *invGammaRescale = log( SDR_SL_ratio + HDR_RL_idx / 1024 - 1) / log(HDR_RL_idx / 1024)*        (eq. 2)

with   *RL_TM[i]*   representing   the   reference   level-based   TM   curve   and   G(i)= $\mathrm{power}(i / 1024, \mathrm{invGammaRescale}) = (\frac{1}{1024})^{\mathrm{invGammaRescale}}$ is a gamma curve.

The mathematical operation of equation (eq. 1) represents an application of a curve based on a gamma curve to the original TM curve. When applied to the original TM curve *Orig_TM[i],* this equation (eq. 1) has the advantage of moving away the reference level-based TM curve from the original TM curve in a progressive manner. However, other mathematical operations could be used for the same purpose.
The mathematical operation of equation (eq. 1) works well in for almost all reference levels values except when a reference level is extreme, i.e. very far away from the original TM curve. An extreme reference level does not correspond to valid conditions expected in a real production world. In order to deal with such extreme reference levels, a validation process is applied to determine whether the mathematical operation is valid. In the embodiment based on SL-HDR1, the mathematical operation is valid if:

$$\log( SDR\_RL\_ratio + HDR\_RL\_idx / 1024 - 1) \text{ is defined, i.e. if:}$$

$$(SDR\_RL\_ratio + HDR\_RL\_idx / 1024 - 1) > 0 \qquad (eq.\ 3)$$

If *(SDR_RL_ratio + HDR_RL_idx / 1024 - 1) > 0*, then a variable *Ratio_OK* is set to true and step 803 is followed by a step 804.

If *(SDR_RL_ratio + HDR_RL_idx / 1024 - 1) ≤ 0*, then a variable Ratio_KO is set to true and step 803 is followed by step 810.

In step 804, the processing module 40 computes the reference level-based TM curve applying equations (eq. 1) and (eq. 2) up to the *HDR_RL* abscissa, i.e., the processing module 40 computes the reference level-based TM curve RL_TM[i] for i in *[0; HDR_RL_idx]* by modifying the original TM curve applying equation (eq. 1). The process of step 804 applies in the *Above_TM_case* and the *Below_TM_case* cases.

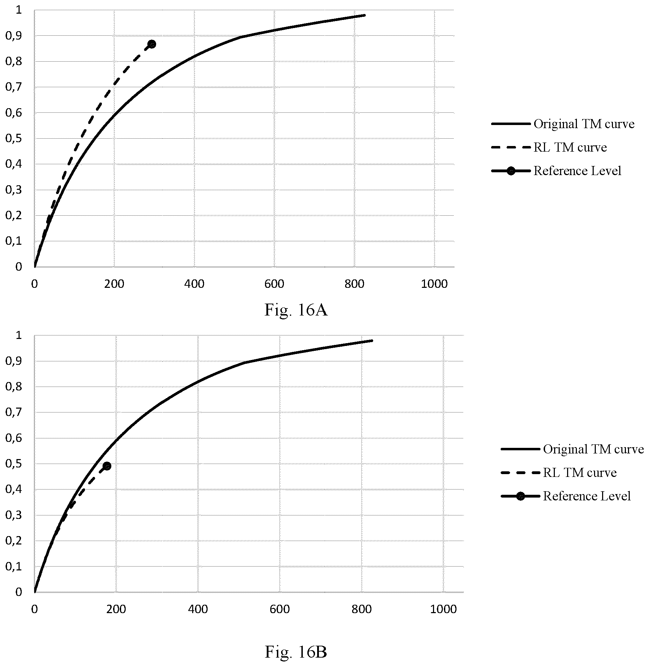

**Figs. 16A** and **16B** illustrate examples of curves obtained applying step 804 in the *Before_HDR_RL_case* case and the *Above_TM_case* (Fig. 16A) or the *Below_TM_case* (Fig. 16B).

In a step 805, the processing module 40 determines if the reference level is above *(Above_TM_case)* or below *(Below_TM_case)* the original TM curve to deal with the *After_RL_case* case. Indeed, the *After_RL_case* case needs to be managed differently, with different mathematical operations, depending on the position of the reference levels.

This determination is based on the value *invGammaRescale:*

If *(invGammaRescale < 1)*
The *Above_TM_case* case is detected. Step 805 is followed by a step 806.
Else *(invGammaRescale >= 1)*
The *Below_TM_case* case is detected. Step 805 is followed by a step 807.

In step 806, the processing module 40 computes the reference level-based TM curve in the *Above_TM_case* between the HDR_RL abscissa *HDR_RL_idx* and the value *max HDR,* i.e., the processing module 40 computes the reference level curve in the *after_HDR_RL_case* case. The following operation is applied:
For each index *i* above *HDR_RL_idx* and up to *max HDR:*

$$RL\_TM[i] = Orig\_TM[i] \times (1 + (SDR\_RL\_ratio - 1) \times power(\ (max\_HDR - i) / (max\_HDR - HDR\_RL\_idx), 3)\ ) \qquad (eq.\ 4)$$

Where power $(a,b) = a^b$.

The mathematical operation of equation (eq. 4) applied to the original TM curve has the advantage of generating a reference level-based TM curve approaching progressively the original TM curve, i.e., of generating a reference level TM curve starting at the reference level and joining progressively the original TM curve at least at the value *max HDR*. However, other mathematical operations could be used for the same purpose.

In some extreme cases, this mathematical operation may generate a reference level-based TM curve with a non-monotonic increasing part.

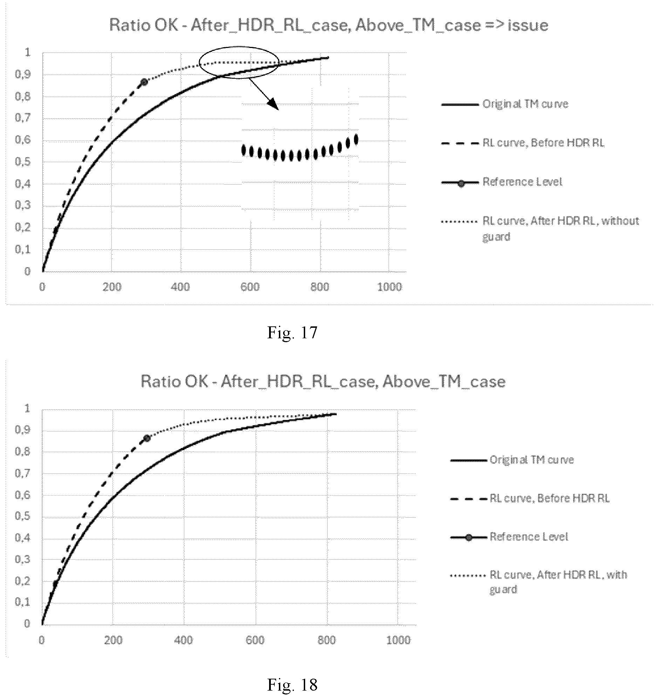

**Fig. 17** illustrates a reference level-based TM curve with a non-monotonic increasing part.

Such reference level-based TM curve with a non-monotonic increasing part is problematic since a TM curve must absolutely be bijective. To prevent such issue a protection process is applied. This protection process consists in computing a straight line, that is a monotonic increasing line, for each index i, between the preceding point *RL_TM [i-1]* and the last point of the reference level-based TM curve, and to assign the value of the straight line for the current index i applying equation (eq. 5):

$$RL\_TM[i] = RL\_TM[i - 1] + (max\_SDR - RL\_TM[i - 1]) / (max\_HDR - (i - 1))$$

$$(eq.\ 5)$$

Finally, in step 806, for each index i, the processing module 40 keeps the maximum value between the result of equation (eq. 4) and the result of equation (eq. 5):

$$RL\_TM[i] = \text{MAX} ($$

$$Orig\_TM[i] \times (1 + (SDR\_RL\_ratio - 1) \times \text{power}( (max\_HDR - i) / (max\_HDR$$

$$- HDR\_RL\_idx), 3) ) ,$$

$$RL\_TM[i - 1] + (max\_SDR - RL\_TM[i - 1]) / (max\_HDR - (i - 1)))$$

$$(\text{eq. } 6)$$

**Fig. 18** illustrates a monotonic increasing reference level-based TM curve obtained applying equation (eq. 6).

Step 806 is followed by a step 813 that ends the process of generating the reference level-based TM curve.

In step 807, the processing module 40 computes the reference level-based TM curve in the *Below_TM_case* between the HDR_RL abscissa *HDR_RL_idx* and the value *HDR_CP_idx,* i.e., the processing module 40 computes the reference level curve in the *after_HDR_RL_case* case.

For each index *i* above *HDR_RL_idx* and up to *HDR CP idx:*

$$RL\_TM[i] = Orig\_TM[i] \times (1 + (SDR\_SL\_ratio - 1) \times \text{power}( (HDR\_CP\_idx - i)/ (HDR\_CP\_idx - HDR\_RL\_idx), 3) ) \qquad (\text{eq. } 7)$$

Finally, in step 807, for each index i, the processing module 40 keeps the maximum value between the result of equation (eq. 7) and the original TM curve, resulting in the following equation (eq. 8):

$$RL\_TM[i] = \text{MIN}(Orig\_TM[i] , Orig\_TM[i] \times (1 + (SDR\_RL\_ratio - 1) \times \text{power}((HDR\_CP\_idx - i) / (HDR\_CP\_idx - HDR\_RL\_idx), 3) ) \qquad (\text{eq. } 8)$$

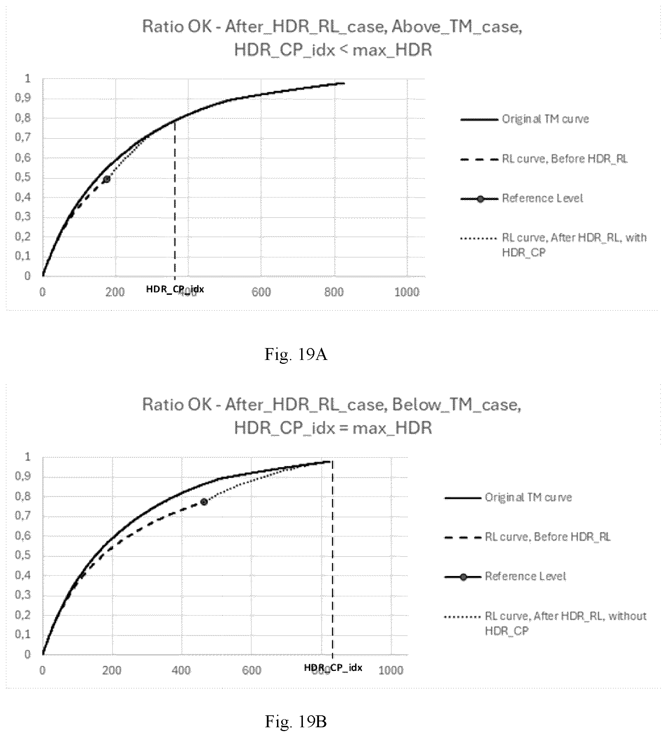

**Figs. 19A and 19B** illustrate a monotonic increasing reference level-based TM curve obtained applying step 807. In Fig. 19A, *HDR_CP_idx < max_HDR.* In Fig. 19B, *HDR_CP_idx = max_HDR.*

Step 807 is followed by a step 808 during which the processing module 40 determines if all the reference level-based TM curve had been computed.

If *HDR_CP_idx = max_HDR,* then all the reference level-based TM curve had been computed. Step 808 is followed by step 813.

If *HDR_CP_idx < max_HDR,* then step 808 is followed by a step 809.

During step 809, the processing module 40 computes the reference level-based TM curve from the convergence point's abscissa *HDR_CP_idx* to the value *max HDR.* In that case, the computation of the reference level-based TM curve between *HDR CP_idx* and *max_HDR* is simply a copy of the original TM curve:

For each index *i* above *HDR_CP_idx* and up to *max HDR:*

$$RL\_TM[i] = Orig\_TM[i]$$

This produces the part of the curve after HDR_CP_idx shown in the right part of Fig. 19A.

Step 809 is followed by step 813.

When the variable *Ratio KO* is true, i.e. the reference level conditions are unrealistic and extreme, step 803 is followed by steps 810 and 811.

As the reference level conditions are unrealistic and extrema, a goal of steps 810 and 811 is to build a simple reference level-based TM curve based on simple mathematical functions that can never make a system crash due to impossible computations. This case only happens when *(SDR_RL_ratio + HDR_RL_idx* / 1024 - 1) $\leq$ 0 (see equation (eq. 3)) is verified (see step 803), therefore this can only happen in the *Below_TM_case* case.

The idea is to use some simple modulation techniques that are different in the *BeforeHDR_RL_case* case and in the *After_HDR_RL_case* case.

To do so, an example of algorithm is proposed in steps 810 and 811.

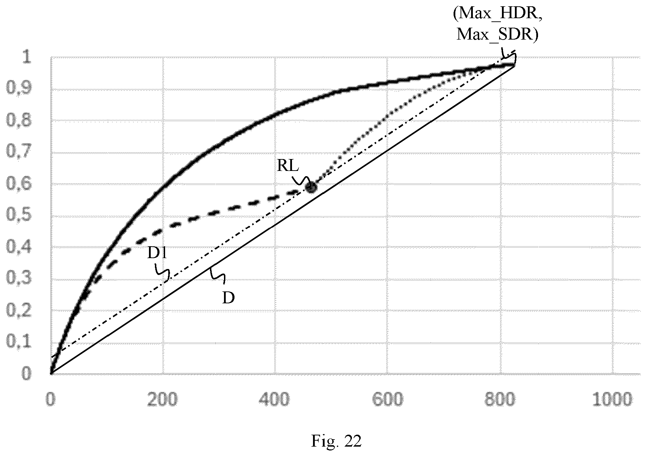

**Fig. 22** illustrates the algorithm applied for defining a reference level-based TM curve in case of unrealistic or extreme reference levels of steps 810 and 811.

This algorithm comprises defining a straight-line D passing through the point (0,0) and the point (Max_HDR, Max_SDR), and translating the straight-line D to obtain a second straight-line D1 parallel to the straight line D and that passes through the reference level (represented by the point RL).

Between the point (0,0) and the reference level, the reference level-based TM curve is a weighted average between the original TM curve and the straight line D1 such that the weight applied to the original TM curve is inversely proportional to the index of the abscissa (i.e. the index of the HDR value) and the weight applied to the segment D1 is proportional to the index of the abscissa. Between the reference level and the point (Max_HDR, Max_SDR), the reference level-based TM curve is a weighted average between the original TM curve and the straight line D1 such that the weight applied to the original TM curve is proportional to the index of the abscissa and the weight applied to the straight line D1 is inversely proportional to the index of the abscissa.

In a step 810, the processing module 40 generates the part of the reference level TM curve corresponding to the *Before_HDR_RL_case* case.

For the *Before_HDR_RL_case* case, a modulation is as follow:

For each index *i* in *[0, HDR_RL_idx]*, define two modulations:

- Modulation 1: modulate the original TM curve, i.e. apply a mathematical function *modulation1[i]*:

    *Orig_TM[i]* $\times$ *modulation1[i]*

    with *modulation1[i]* being a "straight line" with the following conditions:

    ◦ *modulation1[0]* = 1;
    ◦ *modulation1[HDR_RL_idx]* = 0.
    This defines a straight line function (y = *a_p1_y* $\times$ x + *b_p1_y*) with *a_p1_y* = - 1 / *HDR__RL_idx* and *b_p1_y* = 1.

- Modulation 2: modulate a straight line (D2[i]) that is built with a straight line (D1) between the origin (0, 0) and the extrema (max_HDR, max_SDR) of the original TM curve, and translated to the reference level point.

    (D1) is defined by (y = *a_tan_rl* $\times$ x) with *a_tan_rl* = *max_SDR* / *max HDR*. (D2) is the translated line from (D1) with equation (D2) = (y = *a_tan_rl* $\times$ x + *b_tan_rl)* and with:

    *D2[HDR_RL_idx]* = *expected_SDR_RL,*

    therefore giving:

$$b\_tan\_rl = expected\_SDR\_RL - max\_SDR \times HDR\_RL\_idx / max\_HDR$$

    (*D2[i]*) is then modulated by the function *modulation2[i]:*

    *D2[i]* * *modulation2[i]*

    with *modulation2[i]* being a "straight line" with the following conditions:

    ◦ *modulation2[0]* = 0;
    ◦ *modulation2[HDR _RL_idx]* = 1.

    This defines a "straight line" function (y = *a_p1_tan* $\times$ x + *b_p1_tan*) with *a_p1_tan* = 1 / *HDR_RL_idx* and *b_p1_tan* = 0.

To ensure that this operation does not produce a curve that can be above the original TM curve, a protection process is applied consisting in taking the minimum value between the results of the 2 modulations and the original TM curve

The resulting reference level-based TM curve is therefore defined as follows:

For each index *i* in *[0, HDR_RL_idx]*,

*RL_TM[i]* = MIN(*Orig_TM[i], Orig_TM[i]* $\times$ ( *a_pl_y* $\times$ i + *b_pl_y* ) + ( *a_tan_rl* $\times$ i + *b_tan_rl* ) $\times$ (*a_pl_tan* $\times$ i + *b_pl_tan* ) )     (eq. 9)

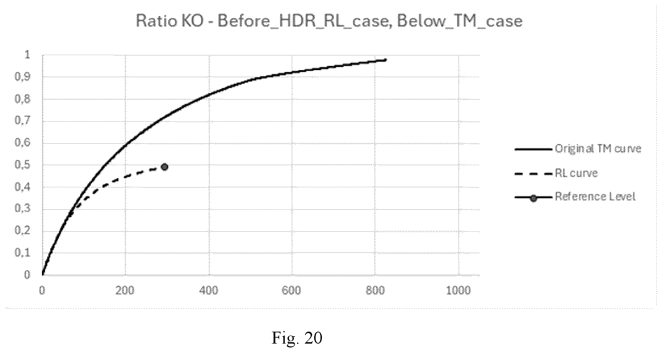

**Fig. 20** illustrates a part of monotonic increasing reference level-based TM curve obtained applying step 810.

In a step 811, the processing module 40 generates the part of the reference level TM curve corresponding to the *After_HDR_RL_case* case.

For the *AfterHDR_RL_case,* the modulation is as follow:
For each index *i* in [*HDR_RL_idx, HDR_CP_idx*], define two modulations:

◦ Modulation 3: modulate the original TM curve, i.e. apply a mathematical function *modulation3[i]:*

*orig_TM[i]* × *modulation3[i]*
with modulation3[i] being a "straight line" with the following conditions:

modulation3[HDR_RL_idx] = 0;
modulation3[HDR_CP_idx] = 1.
This defines a straight line function $(y = a\_p2\_y \times x + b\_p2\_y)$ with $a\_p2\_y = 1 / (HDR\_CP\_idx - HDR\_RL\_idx)$ and $b\_p2\_y = HDR\_\_RL\_idx / (HDR\_RL\_idx - HDR\_CP\_idx)$.

◦ Modulation 4: modulate the already computed straight line (D2[i]) $(y = a\_tan\_rl \times x + b\_tan\_rl)$ (see *before_HDR_RL_case* case) with the *modulation4[i]* function:

*D2[i]* × *modulation4[i]*
with *modulation4[i]* being a "straight line" with the following conditions:

modulation4[HDR_RL_idx] = 1;
modulation4[HDR_CP_idx] = 0.
This defines a straight line function $(y = a\_p2\_tan \times x + b\_p2\_tan)$ with $a\_p2\_tan = 1 / (HDR\_RL\_idx - HDR\_CP\_idx)$ and $b\_p2\_tan = HDR\,CP\_idx / (HDR\,CP\_idx - HDR\_RL\_idx)$.

To ensure that this operation does not produce a curve that can be above the original TM curve, a protection process is applied consisting in taking the minimum value between the results of the 2 modulations and the original TM curve.
The resulting reference level-based TM curve is therefore defined as follows:
For each index *i* in *[HDR_RL_idx, HDR CP idx]*,

$RL\_TM[i] = MIN(Orig\_TM[i], Orig\_TM[i] \times ( a\_p1\_y \times i + b\_p2\_y ) + ( a\_tan\_rl \times i + b\_tan\_rl) \times ( a\_p2\_tan \times i + b\_p2\_tan ) )$

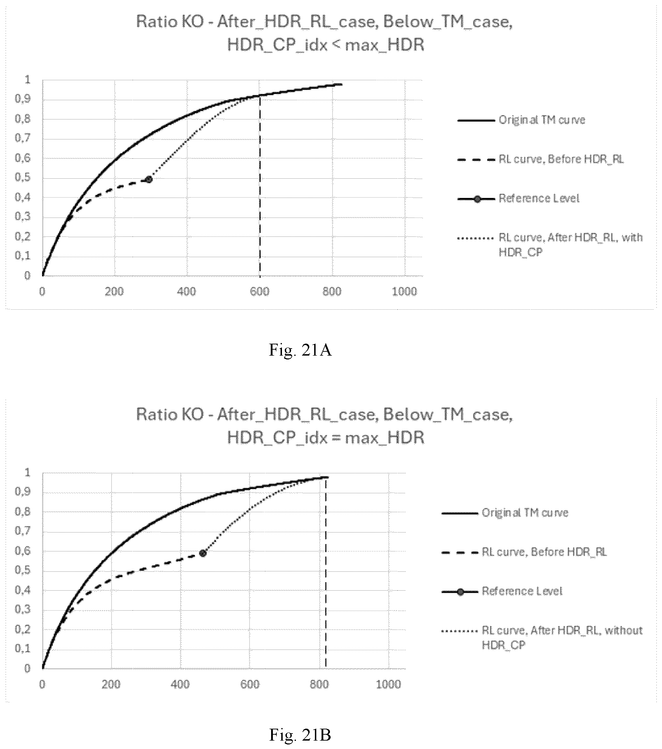

**Figs. 21A and 21B** illustrate two examples of a part of monotonic increasing reference level-based TM curve obtained applying step 812. In Fig. 21A, *HDR CP_idx < max HDR.* In Fig. 21B, *HDR_CP_idx = max_HDR.*
Step 811 is followed by step 808 already explained.
Until now, the embodiment described in relation to Figs. 8A, 8B and 15 considered a single reference level (HDR_RL, SDR_RL). In another embodiment, the processes of Figs. 8A, 8B and 15 could be extended to a plurality of reference levels.
In that case, the construction of the reference level-based tone mapping curve could be an iterative succession of the process described in Fig. 15, the process of Fig. 15 being applied at each iteration to a different reference level.
The process of Fig. 15 use interpolations to construct the reference level-based TM curve. In a variant, the construction of the reference level-based tone mapping curve in case of a plurality of reference levels may use other interpolation techniques such as polynomial interpolations, splines, hermits, ...
In addition, one can note that until now, the first part of the reference level TM curve corresponding to the *Before_HDR_RL_case* case starts at the origin (0,0). In a variant, the first part of the reference level TM curve corresponding to the *BeforeHDR_RL_case* case may start at a point closer to the HDR_RL point.
We described above a number of embodiments. Features of these embodiments can be provided alone or in any combination. Further, embodiments can include one or more of the following features, devices, or aspects, alone or in any combination, across various claim categories and types:

• A server, camera, TV, set-top box, cell phone, tablet, personal computer or other electronic device that performs at least one of the embodiments described.

• A TV, set-top box, cell phone, tablet, personal computer or other electronic device that performs at least one of the embodiments described, and that displays (e.g. using a monitor, screen, or other type of display) a resulting image.

**Claims**

1. A method for converting a first signal in a HDR domain in a second signal in a SDR domain comprising:

   determining (602) a first tone mapping curve from an analysis of the first signal;
   modifying (80, 81) the first tone mapping curve to obtain a second tone mapping curve passing through at least one reference level, a reference level representing a couple of a HDR luminance value and a SDR luminance value; and,
   converting (603) a luminance component of the first signal into a luminance component of the second signal using the second tone mapping curve.

2. The method of claim 1 wherein, modifying (80, 81) the first tone mapping curve to obtain a second tone mapping curve passing through at least one reference level comprises:
   modifying (804) the first tone mapping curve based on a point (0,0) and a first reference level of the at least one reference level using a curve based on a gamma curve responsive to (803) a first value is greater than zero, the first value depending on a first index representative of the HDR luminance value of the first reference level and on a ratio between a second value representative of the SDR luminance value of the first reference level and a third value provided by the first tone mapping curve for the first index representative of the HDR luminance value of the first reference level.

3. The method of claim 1 or 2 wherein, responsive to (805) the first reference level is above the first tone mapping curve, modifying (80, 81) the first tone mapping curve to obtain a second tone mapping curve passing through at least one reference level comprises:
   modifying (806) the first tone mapping curve based on the first reference level and a maximum point with an abscissa equal to a maximum HDR value and an ordinate equal to a maximum SDR value using a mathematical operation generating a second tone mapping curve starting at the reference level and joining progressively the first tone mapping curve at least at the maximum HDR value.

4. The method of claim 1 or 2 wherein, responsive to (805) the first reference level is below the first tone mapping curve, modifying (80, 81) the first tone mapping curve to obtain a second tone mapping curve passing through at least one reference level comprises:

   defining a second index between a third index representing the HDR luminance value of the first reference level and a maximum HDR value, the second index representing an abscissa of a convergence point between the second tone mapping curve and the first tone mapping curve, the convergence point specifying an abscissa at which the second tone mapping curve joins the first tone mapping curve between the third index and the maximum HDR value; and
   modifying (807) the first tone mapping curve to obtain the second tone mapping curve based on the first reference level and the convergence point.

5. The method of claim 4 wherein, responsive to the second index is lower than the maximum HDR value, defining (809) the second tone mapping curve as a copy of the first tone mapping curve between the second index and the maximum HDR value.

6. The method of claim 1 wherein, modifying (80, 81) the first tone mapping curve to obtain a second tone mapping curve passing through at least one reference level comprises:

   responsive to (803) a first value is lower than or equal to zero, modifying (810) the first tone mapping curve based on a point (0,0) and a first reference level of the at least one reference level between the point (0,0) and an index representing the HDR luminance value of the first reference level using a weighted average between the first tone mapping curve and a straight line passing through the reference level and parallel to a straight line passing through the point (0,0) and a maximum point with an abscissa equal to a maximum HDR value and an ordinate equal to a maximum SDR value; and,
   modifying (811) the first tone mapping curve based on the first reference level of the at least one reference level and a maximum point with an abscissa equal to a maximum HDR luminance value and an ordinate equal to a maximum SDR value between the reference level and the maximum point using a weighted average between the first tone mapping curve and a straight line passing through the reference level and parallel to a straight line passing through the point (0,0) and the maximum point;

the first value depending on a first index representative of the HDR luminance value of the first reference level and on a ratio between a second value representative of the SDR luminance value of the first reference level and a third value provided by the first tone mapping curve for the first index representative of the HDR luminance value of the first reference level.

7. A device for converting a first signal in a HDR domain in a second signal in a SDR domain comprising electronic circuitry configured for:

   determining (602) a first tone mapping curve from an analysis of the first signal;
   modifying (80, 81) the first tone mapping curve to obtain a second tone mapping curve passing through at least one reference level, a reference level representing a couple of a HDR luminance value and a SDR luminance value; and,
   converting (603) a luminance component of the first signal into a luminance component of the second signal using the second tone mapping curve.

8. The device of claim 7 wherein, modifying (80, 81) the first tone mapping curve to obtain a second tone mapping curve passing through at least one reference level comprises:
   modifying (804) the first tone mapping curve based on a point (0,0) and a first reference level of the at least one reference level using a curve based on a gamma curve responsive to (803) a first value is greater than zero, the first value depending on a first index representative of the HDR luminance value of the first reference level and on a ratio between a second value representative of the SDR luminance value of the first reference level and a third value provided by the first tone mapping curve for the first index representative of the HDR luminance value of the first reference level.

9. The device of claim 7 or 8 wherein, responsive to (805) the first reference level is above the first tone mapping curve, modifying (80, 81) the first tone mapping curve to obtain a second tone mapping curve passing through at least one reference level comprises:
   modifying (806) the first tone mapping curve based on the first reference level and a maximum point with an abscissa equal to a maximum HDR value and an ordinate equal to a maximum SDR value using a mathematical operation generating a second tone mapping curve starting at the reference level and joining progressively the first tone mapping curve at least at the maximum HDR value.

10. The device of claim 7 or 8 wherein, responsive to (805) the first reference level is below the first tone mapping curve, modifying (80, 81) the first tone mapping curve to obtain a second tone mapping curve passing through at least one reference level comprises:

    defining a second index between a third index representing the HDR luminance value of the first reference level and a maximum HDR value, the second index representing an abscissa of a convergence point between the second tone mapping curve and the first tone mapping curve, the convergence point specifying an abscissa at which the second tone mapping curve joins the first tone mapping curve between the third index and the maximum HDR value; and
    modifying (807) the first tone mapping curve to obtain the second tone mapping curve based on the first reference level and the convergence point.

11. The device of claim 10 wherein, responsive to the second index is lower than the maximum HDR value, defining (809) the second tone mapping curve as a copy of the first tone mapping curve between the second index and the maximum HDR value.

12. The device of claim 7 wherein, modifying (80, 81) the first tone mapping curve to obtain a second tone mapping curve passing through at least one reference level comprises:

    responsive to (803) a first value is lower than or equal to zero, modifying (810) the first tone mapping curve based on a point (0,0) and a first reference level of the at least one reference level between the point (0,0) and an index representing the HDR luminance value of the first reference level using a weighted average between the first tone mapping curve and a straight line passing through the reference level and parallel to a straight line passing through the point (0,0) and a maximum point with an abscissa equal to a maximum HDR value and an ordinate equal to a maximum SDR value; and,
    modifying (811) the first tone mapping curve based on the first reference level of the at least one reference level and a maximum point with an abscissa equal to a maximum HDR luminance value and an ordinate equal to a maximum SDR value between the reference level and the maximum point using a weighted average between the first tone mapping curve and a straight line passing through the reference level and parallel to a straight line passing through the point (0,0) and the maximum point;

the first value depending on a first index representative of the HDR luminance value of the first reference level and on a ratio between a second value representative of the SDR luminance value of the first reference level and a third value provided by the first tone mapping curve for the first index representative of the HDR luminance value of the first reference level.

13. Non-transitory information storage medium storing program code instructions for implementing the method according to any previous claims from claim 1 to 6.

14. A computer program comprising program code instructions for implementing the method according to any previous claim from claim 1 to 6.

Fig. 1A

Fig. 1B

Fig. 1C

Fig. 2

Fig. 3

Fig. 4A

Fig. 4B

64　　　65　　　66

| Display | Speakers | Peripherals |

| RF, COMP, USB, HDMI | Display Interface | Audio Interface | Peripheral Interface |

60　　　61　　　62　　　63

405

40

A

41

Communication channel

Fig. 4C

```
┌─────────────────┐
│  Obtain HDR     │ ⌇500
│  signal         │
└─────────────────┘
         │
         ▼
┌─────────────────┐
│  HDR YUV to     │
│  HDR RGB        │ ⌇501
│  conversion     │
└─────────────────┘
         │
         ▼
┌─────────────────┐
│  HDR RGB to     │
│  SDR RGB        │ ⌇502
│  conversion     │
└─────────────────┘
         │
         ▼
┌─────────────────┐
│  SDR RGB to SDR │ ⌇503
│  YUV conversion │
└─────────────────┘
```

Fig. 5

```
┌─────────────────┐
│  Obtain HDR     │ ⌇600
│  signal         │
└─────────────────┘
         │
         ▼
┌─────────────────┐
│  HDR YUV to     │
│  HDR RGB        │ ⌇601
│  conversion     │
└─────────────────┘
         │
         ▼
┌─────────────────┐
│  Analysis and   │
│ computation of HDR │ ⌇602
│  Y to SDR Y curve │
└─────────────────┘
         │
         ▼
┌─────────────────┐
│  HDR Y to SDR Y │
│  conversion     │ ⌇603
│ HDR UV to SDR UV │
│  conversion     │
└─────────────────┘
         │
         ▼
┌─────────────────┐
│  Chroma         │ ⌇604
│  correction     │
└─────────────────┘
```

Fig. 6

```
┌─────────────────┐
│  Obtain HDR     │ ⌇700
│  signal         │
└─────────────────┘
         │
         ▼
┌─────────────────┐
│  HDR YUV to     │
│  HDR RGB        │ ⌇701
│  conversion     │
└─────────────────┘
         │
         ▼
┌─────────────────┐
│  Analysis and   │
│ computation of HDR │ ⌇702
│  Y to SDR Y curve │
└─────────────────┘
         │
         ▼
┌─────────────────┐
│  Compute specular │
│  part of HDR Y to │ ⌇703
│  SDR Y curve    │
└─────────────────┘
         │
         ▼
┌─────────────────┐
│  HDR Y to SDR Y │
│  conversion     │ ⌇704
│ HDR UV to SDR UV │
│  conversion     │
└─────────────────┘
         │
         ▼
┌─────────────────┐
│  Chroma         │ ⌇705
│  correction     │
└─────────────────┘
```

Fig. 7

Obtain HDR signal ⟿600

HDR YUV to HDR RGB conversion ⟿601

Analysis and computation of HDR Y to SDR Y curve ⟿602

HDR Y to SDR Y curve Adaptation to reference levels ⟿80

HDR Y to SDR Y conversion HDR UV to SDR UV conversion ⟿603

Chroma correction ⟿604

Fig. 8A

Obtain HDR signal ⟿700

HDR YUV to HDR RGB conversion ⟿701

Analysis and computation of HDR Y to SDR Y curve ⟿702

HDR Y to SDR Y curve Adaptation to reference levels ⟿81

Compute specular part of HDR Y to SDR Y curve ⟿703

HDR Y to SDR Y conversion HDR UV to SDR UV conversion ⟿704

Chroma correction ⟿705

Fig. 8B

Fig. 9

Fig. 10

Fig. 11

Fig. 12

Fig. 13

Fig. 14A

Fig. 14B

Fig. 15

Fig. 16A

Fig. 16B

## Ratio OK - After_HDR_RL_case, Above_TM_case => issue

- Original TM curve
- RL curve, Before HDR RL
- Reference Level
- RL curve, After HDR RL, without guard

Fig. 17

## Ratio OK - After_HDR_RL_case, Above_TM_case

- Original TM curve
- RL curve, Before HDR RL
- Reference Level
- RL curve, After HDR RL, with guard

Fig. 18

Ratio OK - After_HDR_RL_case, Above_TM_case,
HDR_CP_idx < max_HDR

HDR_CP_idx

Original TM curve

RL curve, Before HDR_RL

Reference Level

RL curve, After HDR_RL, with HDR_CP

Fig. 19A

Ratio OK - After_HDR_RL_case, Below_TM_case,
HDR_CP_idx = max_HDR

HDR_CP_idx

Original TM curve

RL curve, Before HDR_RL

Reference Level

RL curve, After HDR_RL, without HDR_CP

Fig. 19B

Fig. 20

Ratio KO - After_HDR_RL_case, Below_TM_case,
HDR_CP_idx < max_HDR

Original TM curve

RL curve, Before HDR_RL

Reference Level

RL curve, After HDR_RL, with HDR_CP

Fig. 21A

Ratio KO - After_HDR_RL_case, Below_TM_case,
HDR_CP_idx = max_HDR

Original TM curve

RL curve, Before HDR_RL

Reference Level

RL curve, After HDR_RL, without HDR_CP

Fig. 21B

Fig. 22

Europäisches
Patentamt
European
Patent Office
Office européen
des brevets

# EUROPEAN SEARCH REPORT

**Application Number**

EP 25 30 5103

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/125802 A1 (DOLBY LAB LICENSING CORP [US]; BALLESTAD ANDERS [CA] ET AL.) 20 September 2012 (2012-09-20) | 1-5, 7-11,13, 14 | INV. G06T5/92 |
| A | * paragraphs [0015], [0017], [0037], [0041] - [0046], [0050], [0054], [0061], [0062], [0064], [0065], [0083], [0086]; figure 3 * | 6,12 | |
| X | WO 2024/179856 A1 (INTERDIGITAL CE PATENT HOLDINGS SAS [FR]) 6 September 2024 (2024-09-06) * Page 1, lines 9-14, Page 3, lines 15-23; figure 3B * | 1,7,13, 14 | |
| X | WO 2018/132329 A1 (DOLBY LABORATORIES LICENSING CORP [US]) 19 July 2018 (2018-07-19) * paragraph [0016]; figure 2 * | 1,7,13, 14 | |
| X | EP 3 672 219 A1 (THOMSON LICENSING [FR]) 24 June 2020 (2020-06-24) * paragraphs [0016], [0112], [0113] * | 1,7,13, 14 | **TECHNICAL FIELDS SEARCHED (IPC)** G06T H04N |

The present search report has been drawn up for all claims

| Place of search | Date of completion of the search | Examiner |
|---|---|---|
| Munich | 5 May 2025 | Tibrewal-Fabricius |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

EP 4 783 108 A1

## ANNEX TO THE EUROPEAN SEARCH REPORT
## ON EUROPEAN PATENT APPLICATION NO.

EP 25 30 5103

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2025

| Patent document cited in search report | Publication date | Patent family member(s) | Publication date |
|---|---|---|---|
| WO 2012125802 A1 | 20-09-2012 | BR 112013023527 A2 | 06-12-2016 |
| | | BR 122015005675 A2 | 20-08-2019 |
| | | CN 103430527 A | 04-12-2013 |
| | | CN 103763456 A | 30-04-2014 |
| | | CN 105516541 A | 20-04-2016 |
| | | CN 105744114 A | 06-07-2016 |
| | | EP 2687005 A1 | 22-01-2014 |
| | | EP 3340598 A1 | 27-06-2018 |
| | | ES 2664508 T3 | 19-04-2018 |
| | | ES 2816103 T3 | 31-03-2021 |
| | | HK 1218198 A1 | 03-02-2017 |
| | | JP 5770865 B2 | 26-08-2015 |
| | | JP 5792369 B2 | 14-10-2015 |
| | | JP 6085011 B2 | 22-02-2017 |
| | | JP 6134755 B2 | 24-05-2017 |
| | | JP 2014512740 A | 22-05-2014 |
| | | JP 2015080216 A | 23-04-2015 |
| | | JP 2015233286 A | 24-12-2015 |
| | | JP 2015233323 A | 24-12-2015 |
| | | KR 20130135315 A | 10-12-2013 |
| | | KR 20140129377 A | 06-11-2014 |
| | | KR 20150016332 A | 11-02-2015 |
| | | PL 2687005 T3 | 31-07-2018 |
| | | PL 3340598 T3 | 30-11-2020 |
| | | PT 3340598 T | 28-08-2020 |
| | | RU 2592074 C1 | 20-07-2016 |
| | | RU 2013145821 A | 20-04-2015 |
| | | RU 2014136061 A | 10-12-2015 |
| | | TW 201304501 A | 16-01-2013 |
| | | TW 201448563 A | 16-12-2014 |
| | | US 8593480 B1 | 26-11-2013 |
| | | US 2014002478 A1 | 02-01-2014 |
| | | US 2016071484 A1 | 10-03-2016 |
| | | US 2018182352 A1 | 28-06-2018 |
| | | WO 2012125802 A1 | 20-09-2012 |
| WO 2024179856 A1 | 06-09-2024 | NONE | |
| WO 2018132329 A1 | 19-07-2018 | CN 110192223 A | 30-08-2019 |
| | | EP 3568829 A1 | 20-11-2019 |
| | | US 2019355314 A1 | 21-11-2019 |
| | | WO 2018132329 A1 | 19-07-2018 |
| EP 3672219 A1 | 24-06-2020 | NONE | |

EPO FORM P0459

For more details about this annex : see Official Journal of the European Patent Office, No. 12/82

**EP 4 783 108 A1**

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2024179856 A

**Non-patent literature cited in the description**

- Guidance for operational practices in HDR television production. *Report ITU-R BT.2408-7*, September 2023
- *Release Notes for HLG Format Conversion LUTs v1.7, BBC Research*, March 2024
- *NBCUniversal Single-Stream Broadcast Production and Distribution Recommendations #NBCU-Rec-UHD-HDR-01.19*, 11 April 2024
- High Dynamic Range Electro-Optical Transfer Function of Mastering Reference Displays. *SMPTE ST 2084:2014*
- Image parameter values for high dynamic range television for use in production and international programme exchange. *Recommendation ITU-R BT.2100-2*, July 2018
- Reference electro-optical transfer function for flat panel displays used in HDTV studio production. *Recommendation ITU-R BT.1886*, March 2011
- High-Performance Single Layer High Dynamic Range (HDR) System for use in Consumer Electronics devices; Part 1: Directly Standard Dynamic Range (SDR) Compatible HDR System (SL-HDR1). *ETSI TS 103 433-1 v1.4.1*, August 2021
- Parameter values for the HDTV standards for production and international programme exchange. *Recommendation ITU-R BT. 709-6*, June 2015